# EUROPEAN PATENT SPECIFICATION

(11) **EP 3 466 638 B1**
(45) Date of publication and mention of the grant of the patent: **11.01.2023**
(21) Application number: 17802702.5
(22) Date of filing: 19.05.2017
(51) Int. Cl.: B29C 45/76, B22D 17/32

(54) **INJECTION MOLDING MACHINE**
SPRITZGIESSMASCHINE
MACHINE DE MOULAGE PAR INJECTION

(30) Priority: 24.05.2016 JP 2016103633
(43) Date of publication of application: 10.04.2019
(73) Proprietor: Sumitomo Heavy Industries, Ltd., Tokyo 141-6025 (JP)
(72) Inventor: HARA, Takayuki, Yokosuka-shi Kanagawa 237-8555 (JP)
(74) Representative: Walcher, Armin
(86) International application number: PCT/JP2017/018849
(87) International publication number: WO 2017/204110

(56) References cited:
- DE-A1-102013 008 002
- JP-A- 2002 086 531
- JP-A- 2006 088 558
- JP-A- 2006 289 778
- JP-A- 2007 304 641
- JP-A- 2012 079 209
- JP-A- 2014 019 039
- JP-A- 2015 116 757

## Description

### BACKGROUND OF THE INVENTION

### Field of the Invention

The present invention relates to an injection molding machine and the like.

### Description of Related Art

Techniques for remotely operating stationary type industrial machines such as injection molding machines have been proposed (refer to, for example, Japanese Unexamined Patent Application Publication No. 2008-238708, and German Patent Application Publication No. 102013008002).

In Japanese Unexamined Patent Application Publication No. 2008-238708, an injection molding machine (a main body) can be operated by using a wireless operating device, so that convenience is improved, and when the position of the wireless operating device is separated to some extent from the injection molding machine, an operation is restricted, so that the inj ectionmolding machine cannot be easily operated from a place which is difficult to visually recognize. And in German Patent Application Publication No. 102013008002, a remote control system for an injection molding machine is proposed.

### SUMMARY OF THE INVENTION

However, if all operations are restricted simply due to being separated to some extent, there is a possibility that user convenience may be lowered, and therefore, it is necessary to achieve both safety and user convenience.

Therefore, in view of the above problem, an object of the present invention is to provide an injection molding machine or the like in which it is possible to achieve both safety and user convenience.

In order to achieve the above object, according to an embodiment of the present invention, there is provided an injection molding machine including: a working unit which includes an injection unit which fills a mold unit with a molding material, and performs work to produce a molding product from a molding material; and a control unit which controls the working unit, in which the control unit is configured to make an operable content of the working unit or the control unit different between a case of operation input from a first terminal when the first terminal is communicably connected to the control unit through a local network, and a case of operation input from a second terminal when the second terminal is communicably connected to the control unit through a predetermined network, and in which the operable content includes at least one operation related to an operation of the working unit, and in which the control unit includes a management unit which is configured to manage identification information for identifying whether or not a certain terminal is connected through the predetermined network , collates predetermined information which is input from a certain terminal with the identification information which is managed by the management unit, and determines an operable content via operation input from the terminal according to a collation result.

Further, according to another embodiment of the present invention, there is provided an injection molding system including: an injection molding machine which includes a working unit which includes an injection unit which fills a mold unit with a molding material, and performs work to produce a molding product from the molding material, and a control unit which controls the working unit; a first terminal connectable to the control unit; and a second terminal connectable to the control unit through a predetermined network, in which the control unit makes an operable content of the working unit or the control unit different between a case of operation input from the first terminal when the first terminal is communicably connected to the control unit and a state of being able to operate the working unit or the control unit through the first terminal is established, and a case of operation input from the second terminal when the second terminal is communicably connected to the control unit through a predetermined network and a state of being able to operate the working unit or the control unit through the second terminal is communicably connected to the control unit through a predetermined network and a state of being able to operate the working unit or the control unit through the second terminal is established.

Further, according to still another embodiment of the present invention, there is provided an industrial machine including: a working unit which performs predetermined work; and a control unit which controls the working unit, in which the control unit makes a controllable content of the working unit or the control unit different between a case of operation input from a first terminal when the first terminal is communicably connected to the control unit and a state of being able to operate the working unit or the control unit through the first terminal is established, and a case of operation input from a second terminal when the second terminalis communicably connected to the control unit through a predetermined network and a state of being able to operate the working unit or the control unit through the second terminal is established.

According to the embodiment described above, it is possible to provide an injection molding machine and the like, in which it is possible to achieve both safety and user convenience.

### BRIEF DESCRIPTION OF THE DRAWINGS

Fig. 1 is a diagram showing an example of a configuration of a main body of an injection molding machine.
Fig. 2 is a block diagram showing an example of a configuration of an operation system of the injection molding machine.
Fig. 3 is a diagram showing an example of registered user information.
Fig. 4 is a flowchart showing an example of user authentication processing by a controller.
Fig. 5 is a sequence diagram showing an example of a series of operations of the injection molding machine, including the user authentication processing.
Fig. 6 is a sequence diagram showing another example of a series of operations of the injection molding machine, including the user authentication processing.
Fig. 7 is a flowchart showing an example of command processing by the controller.
Fig. 8 is a sequence diagram showing an example of a series of operations of the injection molding machine, including the command processing.
Fig. 9 is a flowchart showing an example of user information reference processing by the controller.
Fig. 10 is a sequence diagram showing an example of a series of operations of the injection molding machine, including the user information reference processing.
Fig. 11 is a flowchart showing an example of user information update processing by the controller.
Fig. 12 is a sequence diagram showing an example of a series of operations of the injection molding machine, including the user information update processing.
Fig. 13 is a block diagram showing another example of the configuration of the operation system of the injection molding machine.
Fig. 14 is a block diagram showing still another example of the configuration of the operation system of the injection molding machine.

### DETAILED DESCRIPTION OF THE INVENTION

Hereinafter, modes for carrying out the invention will be described with reference to the drawings.

### [Main Body of Injection Molding Machine]

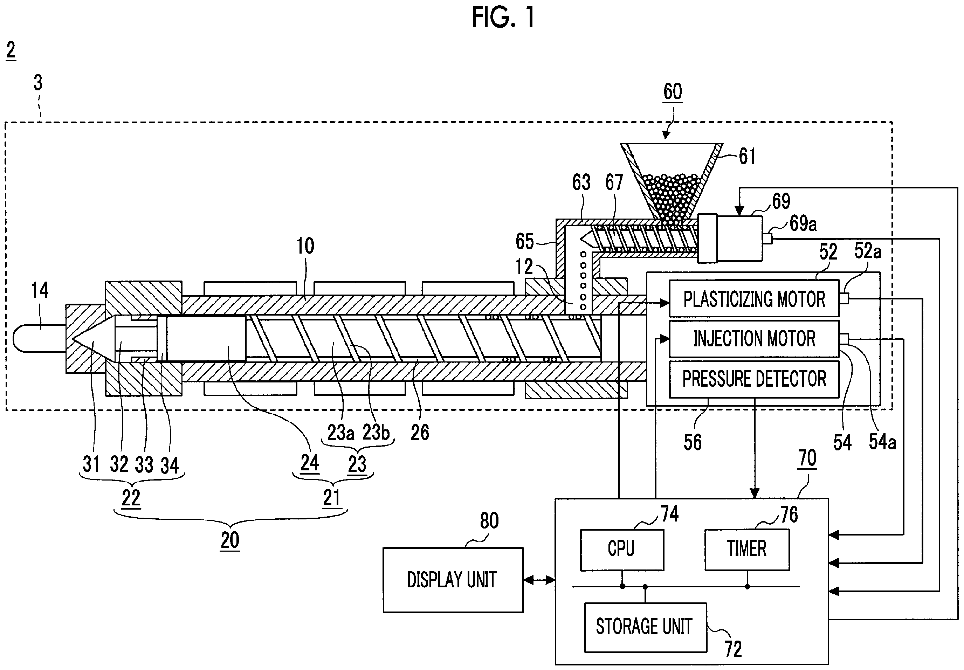

First, a main body 2 of an injection molding machine 1 according to this embodiment will be described with reference to Fig. 1.

Fig. 1 is a diagram showing an example of the configuration of the main body 2 of the injection molding machine 1 according to this embodiment.

As shown in Fig. 1, the main body 2 of the injection molding machine 1 includes a working unit 3, a controller 70, and a display unit 80. Hereinafter, a moving direction (a leftward direction in Fig. 1) of a screw 20 when performing filling will be described as being a forward direction and a moving direction (a rightward direction in Fig. 1) of the screw 20 whenperformingplasticization will be described as being a backward direction.

The working unit 3 performs work (that is, a series of processes such as a filling process, a holding pressure process, and a plasticizing process, which will be described later) to produce a molding product from a molding material. Hereinafter, the work to produce a molding product from a molding material, which includes a series of processes such as a filling process, a holding pressure process, and a plasticizing process will be simply referred to as "work". The working unit 3 includes a plasticizing cylinder 10, the screw 20, a plasticizing motor 52, an injection motor 54, a pressure detector 56, and a material supply unit 60.

The plasticizing cylinder 10 plasticizes a molding material fed from a feed port 12. The feed port 12 is formed in a rear portion of the plasticizing cylinder 10. A heating source such as a heater is provided on the outer periphery of the plasticizing cylinder 10. A nozzle 14 is provided at a front end of the plasticizing cylinder 10.

The screw 20 is disposed so as to be rotatable and be able to advance and retreat in the plasticizing cylinder 10. The screw 20 is mainly configured of a screw main body 21 and an injection section 22 disposed in front of the screw main body 21. The screw main body 21 includes a flight section 23 and a pressure section 24 disposed at a front end of the flight section 23.

The flight section 23 includes a rod-shaped main body part 23a and a spiral flight 23b formed to protrude from the outer peripheral surface of the main body part 23a, and a spiral groove 26 is formed along the flight 23b. Over the range from the rear end to the front end of the flight section 23, the depth of the groove 26 may be constant and a screw compression ratio may be constant.

The pressure section 24 may be configured of a columnar part having an outer diameter larger than that of the rod-shaped mainbodypart23a. Further, a truncated conical inclined portion (not shown) in which an outer diameter gradually increases from the main body part 23a to the columnar part may be provided between the main body part 23a and the columnar part, and the pressure section 24 may be configured of the inclined portion and the columnar part.

The flight section may be formed over the entirety of the screw main body 21 without disposing the pressure section 24. Further, the screw main body 21 may be divided into a feed zone, a compression zone, and a metering zone over an area from a rear end to a front end. In this case, the depth of the spiral groove is deep in the feed zone, shallow in the metering zone, and shallower toward the front in the compression zone.

The injection section 22 includes a head part 31 having a conical portion at the tip thereof, a rod part 32 formed in an aspect adjacent to the rear of the head part 31, a check ring 33 disposed around the rod part 32, and a seal ring (a check ring) 34 mounted on the front end of the pressure section 24.

The plasticizing motor 52 rotates the screw 20. The plasticizing motor 52 may have an encoder 52a. The encoder 52a detects the rotational frequency of the screw 20 by detecting the rotational frequency of an output shaft of the plasticizing motor 52 and outputs a signal indicating the rotational frequency to the controller 70. The controller 70 feedback-controls the plasticizing motor 52 such that the rotational frequency of the screw 20 reaches a setting value, in the plasticizing process.

The injection motor 54 advances and retreats the screw 20. A motion conversion part which converts the rotary motion of the injection motor 54 into the linear motion of the screw 20 is provided between the screw 20 and the injection motor 54. The injection motor 54 may have an encoder 54a. The encoder 54a detects the forward speed of the screw 20 by detecting the rotational frequency of an output shaft of the injection motor 54 and outputs a signal indicating the forward speed of the screw 20 to the controller 70. The controller 70 feedback-controls the injection motor 54 such that the forward speed of the screw 20 reaches a setting value, in the filling process.

The pressure detector 56 is disposed, for example, between the injection motor 54 and the screw 20 and detects pressure acting on the pressure detector 56. Such pressure indicates the back-pressure of the screw 20 or the pressure of the molding material which is pressed by the screw 20. The pressure detector 56 outputs a signal indicating the pressure acting on the pressure detector 56 to the controller 70. The controller 70 feedback-controls the injection motor 54 such that the pressure of the molding material which is pressed by the screw 20 reaches a setting value, in the holding pressure process. Further, the controller 70 feedback-controls the injection motor 54 such that the back-pressure of the screw 20 reaches a setting value, in the plasticizing process.

In the filling process, the injection motor 54 is driven to advance the screw 20, and thus a mold unit is filled with a liquid molding material accumulated in front of the screw 20. The setting value of the forward speed of the screw 20 may be constant or may be changed according to a screw position or an elapsed time. If the screw 20 advances to a predetermined position (so-calledV/Pswitching position), the holding pressure process is started.

If an elapsed time from the start of the filling process reaches a predetermined time, the holding pressure process may be started.

In the holding pressure process, the injection motor 54 is driven to push the screw 20 forward and apply pressure to the molding material in the mold unit. In this way, a shortage of the molding material can be replenished. The setting value of the pressure of the molding material may be constant or may be changed in stages according to an elapsed time or the like. A cooling process is started after the holding pressure process. The plasticizing process may be performed during the cooling process.

In the plasticizing process, the plasticizing motor 52 is driven to rotate the screw 20 and feed the molding material forward along the spiral groove 26 of the screw 20. According to this, the molding material is gradually melted. The screw 20 retreats as the liquid molding material is fed to the front of the screw 20 and accumulated in a front portion of the plasticizing cylinder 10. The setting value of the rotational frequency of the screw 20 may be constant or may be changed according to a screw position or an elapsed time.

In the plasticizing process, in order to limit the sudden retreat of the screw 20, the injection motor 54 may be driven to apply back-pressure to the screw 20. The injection motor 54 is driven such that the back-pressure reaches a setting value. If the screw 20 retreats to a predetermined position and a predetermined amount of molding material is accumulated in front of the screw 20, the plasticizing process is ended.

An injection unit of this embodiment is an in-line screw type, but may be a pre-plasticating type. A pre-plasticating type injection unit feeds a molding material melted in a plasticizing cylinder to an injection cylinder and injects the molding material from the injection cylinder into a mold unit. Further, a screw is disposed in the plasticizing cylinder so as to be rotatable or to be rotatable and be able to advance and retreat, and a plunger is disposed in the injection cylinder so as to be able to advance and retreat.

The material supply unit 60 feeds the molding material to the feed port 12 of the plasticizing cylinder 10 at a set feed rate. The material supply unit 60 includes a hopper 61, a feed cylinder 63, a tubular guide part 65, a feed screw 67, a feed motor 69, and the like.

The material supply unit 60 may have any configuration as long as the feed rate can be changed, and for example, a vacuum loader may be included in place of the feed screw 67.

The feed cylinder 63 horizontally extends from a lower end of the hopper 61 and accommodates the molding material which is fed from the interior of the hopper 61.

The feed cylinder 63 does not need necessarily to extend in the horizontal direction, and for example, the feed cylinder 63 may extend obliquely with respect to the horizontal direction and the outlet side thereof may be higher than the inlet side.

The feed screw 67 is rotatably disposed in the feed cylinder 63.

The feed motor 69 rotates the feed screw 67. The feed motor 69 may have an encoder 69a. The encoder 69a detects the rotational frequency of an output shaft of the feed motor 69, that is, the rotational frequency of the feed screw 67, and outputs a signal indicating such a rotational frequency to the controller 70. The controller 70 feedback-controls the feed motor 69 such that the rotational frequency of the feed screw 67 reaches a setting value, in the plasticizing process.

The feedmotor 69 rotates the feed screw 67, thereby feeding the molding material forward along a spiral groove of the feed screw 67. The molding material is sent from the front end of the feed cylinder 63 to the guide part 65, falls in the guide part 65, and is supplied to the feed port 12 of the plasticizing cylinder 10.

In the plasticizing process, the feed motor 69 is driven to rotate the feed screw 67 and supply the molding material to the feed port 12 of the plasticizing cylinder 10. The feed rate is proportional to the rotational frequency of the feed screw 67. The setting value of the rotational frequency of the feed screw 67 may be constant, similar to the setting value of the rotational frequency of the screw 20, or may be changed according to a screw position or an elapsed time.

The feed screw 67 and the screw 20 may be rotated in synchronization with each other, and the rotation of the feed screw 67 and the screw 20 may be started at the same time and ended at the same time. The molding material is fed forward by the rotation of the screw 20 without staying at the feed port 12. The filling state of the molding material in the groove 26 of the screw 20 is not a dense state but a sparse state (a starvation state).

The rotation of the feed screw 67 may be started earlier than the screw 20 and be ended earlier than the screw 20. The time difference may be, for example, a fall time of the molding material in the guide part 65.

The controller 70 (an example of a control unit) has a storage unit 72 such as a memory, a central processing unit (CPU) 74, a timer 76, and the like, and various programs which are stored in the storage unit 72 are executed in the CPU 74, whereby various operations of the working unit 3 are controlled. Specifically, the controller 70 sets various molding conditions (for example, the above-described various setting values or the like) according to operation input from the display unit 80 or a personal computer (PC) 100 (described later), or causes the working unit 3 to execute the work (each process described above) to produce a molding product from a molding material. Details of the functions of the controller 70 will be described later.

The display unit 80 displays various screens (operation screens) under the control of the controller 70. The display unit 80 includes an operation part (not shown) for accepting operation input, and a display part (not shown) for displaying various screens . The display unit 80 may have the operation part and the display part as one unit and may be, for example, a touch panel type display. A user can operate the controller 70 or the working unit 3 by performing the operation input on the operation part of the display unit 80. Specifically, a user can perform an operation related to the operation of the working unit 3 through the controller 70. In the "operation related to the operation of the working unit 3", an operation for causing the working unit 3 to execute work (a first operation), an operation for changing the molding condition of the working unit 3 (a second operation), an operation for referring to the molding condition of the working unit 3 (a third operation), an operation for referring to operation information of the working unit 3, which includes operation history data of the working unit 3 (for example, detection values of various sensors such as the encoders 52a, 54a, and 69a, a stop history, a change history of the molding conditions, or the like) (a fourth operation), or the like can be included. Further, in the "operation related to the operation of the working unit 3", an operation such as an operation for setting (installing) or changing (updating) data of software (program) or the like for causing the working unit 3 to execute work (a fifth operation), an operation for referring to the data of the software (program) (a sixth operation), or the like can be included. Further, the first operation (the operation for causing the working unit 3 to execute work) may be an operation for causing at least a part of the entire process for producing a molding product from a molding material, of the working unit 3, to be executed.

The "first operation" corresponds to the operation of the working unit 3, because it is an operation for operating the working unit 3. Further, the "second operation" to the "sixth operation" correspond to the operations of the controller 70, because they are operations for requesting reference of (specifically, disclosure of reference data) data related to the operation of the working unit 3, which is stored in an internal memory or the like of the controller 70, or a change of a program or the like. Further, the operation of the working unit 3 may be executable based on a command which is directly transmitted from the operation part of the display unit 80 or the PC 100 (described later) or the like to the working unit 3 without going through the controller 70. Further, in the operation executable from the operation part of the display unit 80 or the PC 100 (described later) or the like, other operations, for example, transmission of various types of data (for example, a new program related to an additional function, an update program of the already installed software, and data related to update information including a parameter or the like for changing the setting value of the molding condition, condition values in a program, or the like) for the controller 70 or the working unit 3 may be included. Further, the "fifth operation" is a data rewriting operation of software, and therefore, depending on the rewriting content, it is also possible to cause the working unit 3 to execute work. For this reason, the "fifth operation" is an example of an operation for allowing the working unit 3 to execute work.

### [Operation System of Injection Molding Machine]

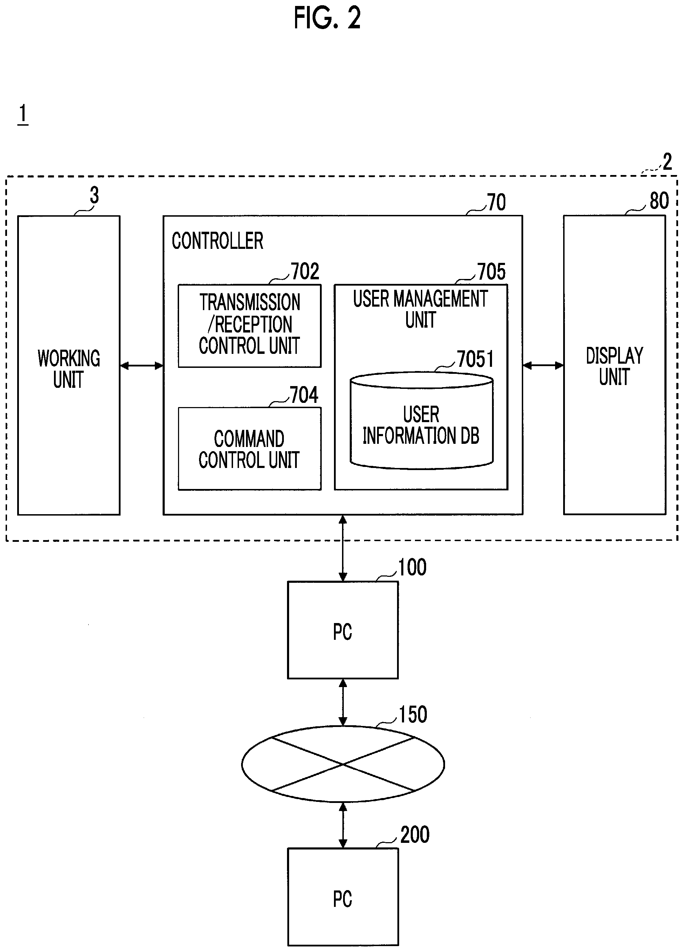

Next, the configuration of an operation system of the injection molding machine 1 will be described with reference to Fig. 2.

Fig. 2 is a diagram showing an example of the configuration of the operation system of the injection molding machine 1 according to this embodiment.

As shown in Fig. 2, the injection molding machine 1 includes the personal computer (PC) 100 and a PC 200, in addition to the main body 2 (the working unit 3, the controller 70, and the display unit 80).

The injection molding machine 1 may have a configuration in which it includes only the main body 2 among the main body 2, the PC 100, and the PC 200, and the injection molding machine 1 (the main body 2), the PC 100, and the PC 200 may be configured as an operation system for operating the injection molding machine 1 (the main body 2).

The PC 100 (an example of a first terminal) is provided separately from the main body 2 and is connected to the controller 70 on a one-to-one basis, that is, directly. The PC 100 canperform the operations related to the operation of the working unit 3, similar to a case of using the operation part of the display unit 80. For example, a predetermined operating system (OS) and an operation application which operates on the OS are installed in the PC 100, and various requests (commands) which include operation input to the controller 70 can be output through the operation application. A user who uses the PC 100 inputs a user identifier (ID) specific to each user and a password associated with the user ID on a login screen which is displayed on the display at the time of start-up of the PC 100, and can log in to the PC 100 by receiving an authentication. Then, the user activates the operation application, thereby being able to output various commands to the controller 70 through the operation application. Hereinafter, the "command" will be described on the premise that it is a request corresponding to an operation related to the working unit 3.

In this embodiment, operations executable from the PC 100 are the third operation to the sixth operation among the first operation to the sixth operation described above. Further, the connection aspect between the PC 100 and the controller 70 may be wired connection or may be wireless connection. Further, the PC 100 may be communicably connected to the main body 2 (specifically, the controller 70) through a local network which is installed in a factory, for example, a local area network (LAN) based on an Ethernet protocol (Ethernet is a registered trademark) . Further, the PC 100 may be replaced with, for example, a tablet terminal or a portable terminal such as a panel type terminal which can be attached to and detached from the main body 2. In this case, the panel type terminal may be, for example, an aspect which integrally includes the display unit 80 described above.

The PC 200 is communicably connected to the PC 100 through a communication network 150 (an example of a predetermined network, for example, a virtual personal network (VPN) using the internet) or the like and can remotely operate the PC 100. For example, a predetermined OS is installed in the PC 200, and an application (for example, a remote desktop function or the like) which operates on the OS and can remotely operate the PC 100 is installed in advance in the PC 200. A user who uses the PC 200 may remotely operate the PC 100 by using the application. Specifically, a user who uses the PC 200 activates the application, inputs a user ID specific to each user and a password associated with the user ID, and receives an authentication, thereby connecting to the PC 100 and being able to remotely operate the PC 100. In this way, the user who uses the PC 200 can perform the operation related to the operation of the working unit 3 through the PC 100. That is, the user of the PC 200 remotely operates the PC 100, thereby activating the operation application, and can cause the controller 70 to output a command. Hereinafter, whether various types of input such as the command which is input from the PC 100 to the controller 70 are performed by directly using the PC 100 or performed by indirectly using the PC 100 through the PC 200 will be described without distinction.

The PC 200 may be a portable terminal such as a smartphone or a tablet terminal, for example, similar to the PC 100.

The controller 70 performs control of the main body 2 which includes the working unit 3 according to a command which is input from the PC 100. The controller 70 includes a transmission/reception control unit 702, a command control unit 704, and a user management unit 705 as functional units which are realized by executing a program stored in a memory (for example, the storage unit 72) such as an internal read only memory (ROM) in a CPU.

The transmission/reception control unit 702 controls exchange between the PC 100 and the command control unit 704 and the user management unit 705. A specific operation of the transmission/reception control unit 702 will be described later.

The command control unit 704 outputs various commands to cause the working unit 3 (specifically, hardware such as the plasticizing motor 52, the injection motor 54, and the feed motor 69 which are included in the working unit 3) to execute work, according to a command corresponding to the first operation which is input from the display unit 80. For example, the command control unit 704 generates a control command corresponding to the feedback-control of each of the plasticizing motor 52, the injection motor 54, and the feed motor 69 described above. Further, the command control unit 704 changes the setting of the molding condition according to a command corresponding to the second operation which is input from the display unit 80. Further, the command control unit 704 generates reference data indicating the setting state of the molding condition, according to a command corresponding to the third operation which is input from the display unit 80 or the PC 100, and discloses the reference data on the display unit 80 or the PC 100 through the transmission/reception control unit 702. Further, the command control unit 704 accumulates operation history data of the working unit 3, generates operation history data (reference data) of the working unit 3 according to the fourth operation which is input from the display unit 80 or the PC 100, and discloses the operation history data on the display unit 80 or the PC 100 through the transmission/reception control unit 702. Further, the command control unit 704 performs a change (rewriting) of the software (program data) which causes the working unit 3 to execute work, according to a command corresponding to the fifth operation which is input from the PC 100. Further, the command control unit 704 generates reference data of the software (program data) which causes the working unit 3 to execute work, according to according to a command corresponding to the sixth operation which is input from the PC 100, and discloses the reference data on the PC 100 through the transmission/reception control unit 702.

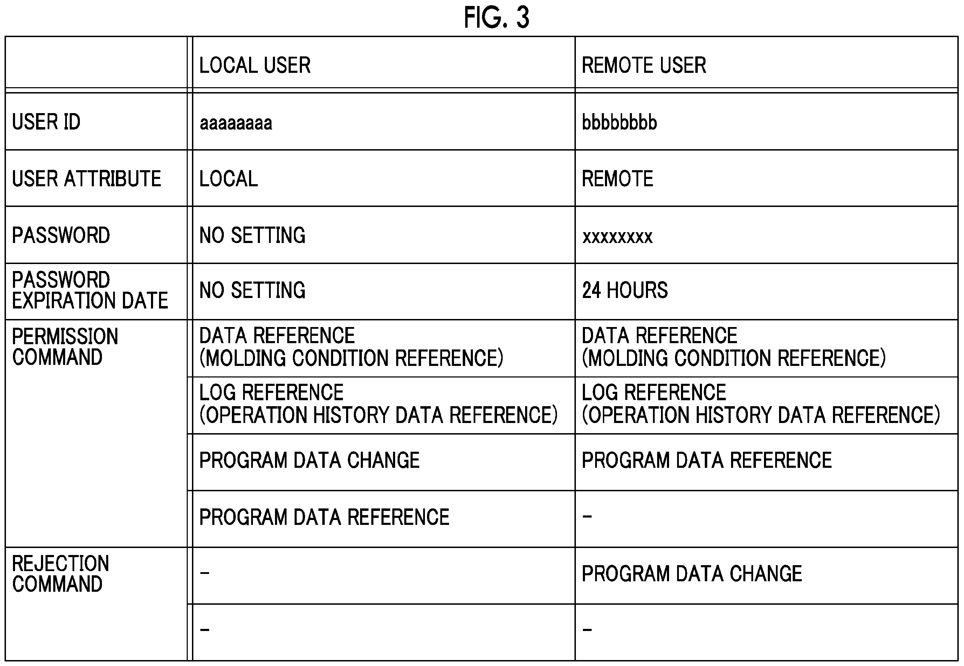

The user management unit 705 manages information on each user who performs the operation related to the operation of the working unit 3, that is, user information (an example of identification information) by using the PC 100 or the PC 200. The user management unit 705 has a user information DB 7051, and the user information is registered in advance in the user information DB 7051. As will be described later, the controller 70 (the transmission/reception control unit 702) performs a user authentication by collating user information (a user ID and a password) which is input from the PC 100 with the user information (the user ID and the password) registered in the user information DB 7051. Hereinafter, the user information registered in the user information DB 7051 (hereinafter referred to as "registered user information") will be described with reference to Fig. 3.

Fig. 3 is a diagram showing an example of the registered user information. Hereinafter, a user who uses the PC 100 is referred to as a local user (an example of a first user), and a user who uses the PC 200 is referred to as a remote user (an example of a second user).

As shown in Fig. 3, a user ID specific to each user, a user attribute (an example of attribute information), a password, and an expiration date of the password are included in the registered user information.

The user ID is defined by, for example, a character string or the like, which is generated by a predetermined algorithm or input from a user. The user ID may be the same as or different from a user ID which is input in order to use the PC 100 (that is, in order to log in to the PC 100). Hereinafter, description will be made on the premise that the user ID is the same as the user ID for using the PC 100.

The user attribute represents a distinction regarding whether the user is a local user or a remote user.

The user attribute may include a content other than the distinction regarding whether the user is a local user or a remote user. For example, the user attribute may include information such as distinction (classification) regarding a duty position or a function in a company or an organization. Specifically, the user attribute may include an "expert" representing a worker with a rich experience and a "beginner" representing a worker with a poor experience. Then, the setting of a password, an expiration date of a password, a permission command, and a rejection command, which will be described later, may be made such that the operation related to the operation of the working unit 3 is restricted with respect to a user who is a "beginner", compared to a user who is an "expert".

The password is for authentication for enabling the operation relating to the operation of the working unit 3 from the PC 100 and can be associated with the user ID. In this example, in the case of "local" indicating that the user attribute is a local user, a password and an expiration date thereof are not set. On the other hand, in the case of "remote" indicating that the user is a remote user, a password and an expiration date thereof are set. That is, a password and an expiration date thereof are set such that it becomes more difficult for the remote user to receive user authentication than in the local user, in other words, the operation related to the operation of the working unit 3 is restricted with respect to the remote user. In this way, a situation can be suppressed in which a user who uses the PC 200 in an environment where the main body 2 cannot be visually recognized can easily perform the operation related to the operation of the working unit 3, in particular, the operation for allowing the working unit 3 to execute work (the fifth operation).

If it is an aspect in which it becomes more difficult for the remote user to receive user authentication than in the local user, the password and the expiration date of the password may be optionally set. For example, with respect to the local user as well, a password which does not have an expiration date or has a later expiration date than that for the remote user may be set. Further, for example, an aspect is also acceptable in which a password is not set with respect to the local user and a password having no expiration date is set with respect to the remote user.

Further, in the user information, a command to permit execution (a permission command) among commands corresponding to the operation related to the operation of the working unit 3, and a command to reject (not to permit) execution (a rejection command) are included. The permission command and the rejection command are defined in advance in an aspect which is linked with the user attribute. That is, the permission command and the rejection command are automatically set and registered based on a correspondence relationship which is defined in advance, according to whether the user attribute is "remote" or "local". Specifically, as shown in Fig. 3, in a case where the user attribute is "local", all commands (commands corresponding to the third to sixth operations) are permission commands and there is no rejection command. On the other hand, in a case where the user attribute is "remote", a data reference command (a command corresponding to the third operation), a log reference command (a command corresponding to the fourth operation), and a program data reference command (a command corresponding to the sixth operation), among all the commands, are permission commands. However, a program data change command (a command corresponding to the fifth operation) is a rejection command. That is, the remote user can refer to data related to the operation of the working unit 3. However, the remote user cannot change the program data for causing the working unit 3 to execute work. In this way, it is possible to prevent a user who uses the PC 200 in an environment where the main body 2 cannot be visually recognized from performing the operation for allowing the working unit 3 to execute work (the fifth operation) among the operations related to the operation of the working unit 3. On the other hand, even in the remote user, operations for referring to the data related to the operation of the working unit 3 (the third operation, the fourth operation, and the sixth operation) are permitted. For this reason, it is possible to performmaintenance such as repair and inspection of the main body 2 from a remote place via the communication network 150 with reference to the data related to the operation of the working unit 3. Further, the permission command and the rejection command which are associated with each user (user ID) are automatically set and registered based on the correspondence relationship which is defined in advance with respect to the user attribute (whether the user is a local user or a remote user). Therefore, it is not necessary to manually input the permission command and the rejection command when registering the user information in the user information DB 7051, and therefore, a possibility that the permission command and the rejection command may be rewritten is suppressed and a situation where it becomes possible for the remote user to cause the working unit 3 to execute work through the rewriting can be suppressed.

In this embodiment, as described above, a user cannot perform the first operation and the second operation on the main body 2 (the controller 70) from the PC 100. However, an aspect is also acceptable in which it is possible to perform the first operation and the second operation from the PC 100. In this case, it is favorable if in a case where the user attribute is "local", the commands corresponding to the first operation and the second operation are set as the permission commands, and in a case where the user attribute is "remote", the commands corresponding to the first operation and the second operation are set as the rejection commands. In this way, it is possible to prevent a user who uses the PC 200 in an environment where the main body 2 cannot be visually recognized from performing the operation for causing the working unit 3 to execute work (the first operation) or the operation for changing the molding condition when the working unit 3 performs work (the second operation), among the operations related to the operation of the working unit 3.

The controller 70 (the transmission/reception control unit 702) controls the working unit 3, based on registered user information which is managed by the user management unit 705. Hereinafter, a processing operation related to the operation system in the injection molding machine 1, which is centered on the controller 70 (the transmission/reception control unit 702), will be described.

### [Various Processing Operations in Injection Molding Machine 1]

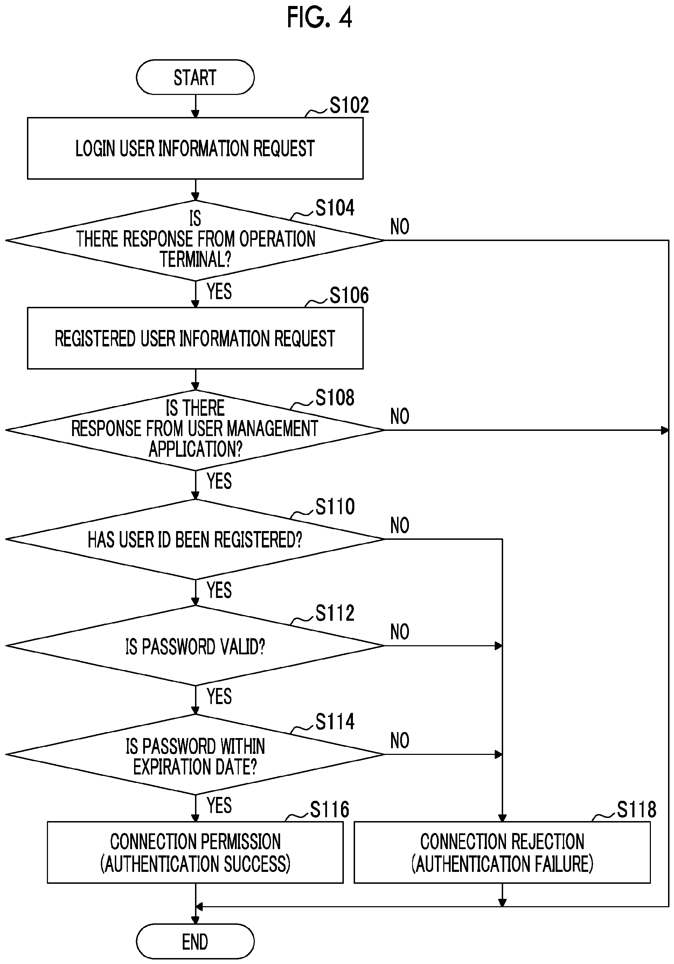

Next, the processing operation related to the operation system of the injection molding machine 1, which is centered on the controller 70 (the transmission/reception control unit 702), will be described with reference to Figs. 4 to 12.

First, a processing operation in the injection molding machine 1 related to a user authentication will be described with reference to Figs. 4 to 6.

Fig. 4 is a flowchart showing an example of user authentication processing by the controller 70 (the transmission/reception control unit 702). The processing according to this flowchart is executed, for example, when a connection request is input from the PC 100.

For example, if the operation application is activated by a user, the PC 100 outputs a connection request to the controller 70.

In step S102, the transmission/reception control unit 702 transmits a signal requesting the user information (the user ID and the password, hereinafter referred to as login user information) input from a user (a login user information request), to the PC 100.

In step S104, the transmission/reception control unit 702 determinates whether or not the login user information has been received from the PC 100. In a case where the login user information has been received from the PC 100, the transmission/reception control unit 702 proceeds to step S106, and in a case where the login user information has not been received for some reason (for example, communication abnormality, abnormality of the operation application of the PC 100, or the like), the transmission/reception control unit 702 ends this processing.

In a case where the login user information has not been received, the transmission/reception control unit 702 may transmit the login user information request again and may cause the display unit 80 to display the fact that there is some abnormality.

In step S106, the transmission/reception control unit 702 transmits a signal requesting the registered user information (specifically, the password and the expiration date of the password) corresponding to the user ID of the login user information (a password request), to the user management unit 705. That is, the transmission/reception control unit 702 transmits a password request which includes the user ID of the login user information to the user management unit 705.

In step S108, the transmission/reception control unit 702 determines whether or not there is a response from the user management unit 705. In a case where there is a response, the transmission/reception control unit 702 proceeds to step S110, and in a case where there is no response for some reason, the transmission/reception control unit 702 ends this processing.

In a case where the user ID of the login user information which is included in the password request has already been registered in the user information DB 7051, the user management unit 705 performs a response which includes the password corresponding to the user ID and the expiration date of the password, and in a case where it is not registered, the user management unit 705 performs a response indicating that it is not registered. Further, in a case where there is no response from the user management unit 705, the transmission/reception control unit 702 may transmit the password request again and may cause the display unit 80 to display the fact that there is some abnormality.

In step S110, the transmission/reception control unit 702 determines whether or not the user ID of the login user information has been registered, based on the content of the response from the user management unit 705. In a case where the user ID of the login user information has been registered, the transmission/reception control unit 702 proceeds to step S112, and in a case where it is not registered, the transmission/reception control unit 702 proceeds to step S118.

In step S112, the transmission/reception control unit 702 determines whether or not the password of the login user information is valid, based on the content of the response from the user management unit 705. That is, the transmission/reception control unit 702 collates the password of the login user information with the password (the password of the registered user information) which is included in the response from the user management unit 705, and determines whether or not the passwords coincide with each other. In a case where the password of the login user information is valid, the transmission/reception control unit 702 proceeds to step S114, and in a case where the password is not valid, the transmission/reception control unit 702 proceeds to step S118.

In step S114, the transmission/reception control unit 702 determines whether or not the password is within the expiration date of the password (that is, whether or not the expiration date of the password has passed), based on the content of the response from the user management unit 705. In a case where the password is within the expiration date of the password (the expiration date has not passed), the transmission/reception control unit 702 proceeds to step S116, and in a case where the password is not within the expiration date of the password (the expiration date has passed), the transmission/reception control unit 702 proceeds to step S118.

The transmission/reception control unit 702 may determine whether or not the password is within the expiration date of the password, based on, for example, a clock (not shown) built in the controller 70.

In step S116, The transmission/reception control unit 702 determines that the authentication is successful, and permits connection from the PC 100 to the controller 70, that is, input of a command from the PC 100 to the controller 70, and transmits a notification to the effect that the connection is permitted (a connection permission notification) to the PC 100.

On the other hand, in step S118, the transmission/reception control unit 702 determines that the authentication has failed, and rejects the connection from the PC 100 to the controller 70, and transmits a notification to the effect that the connection is rejected (a connection refusal notification) to the PC 100.

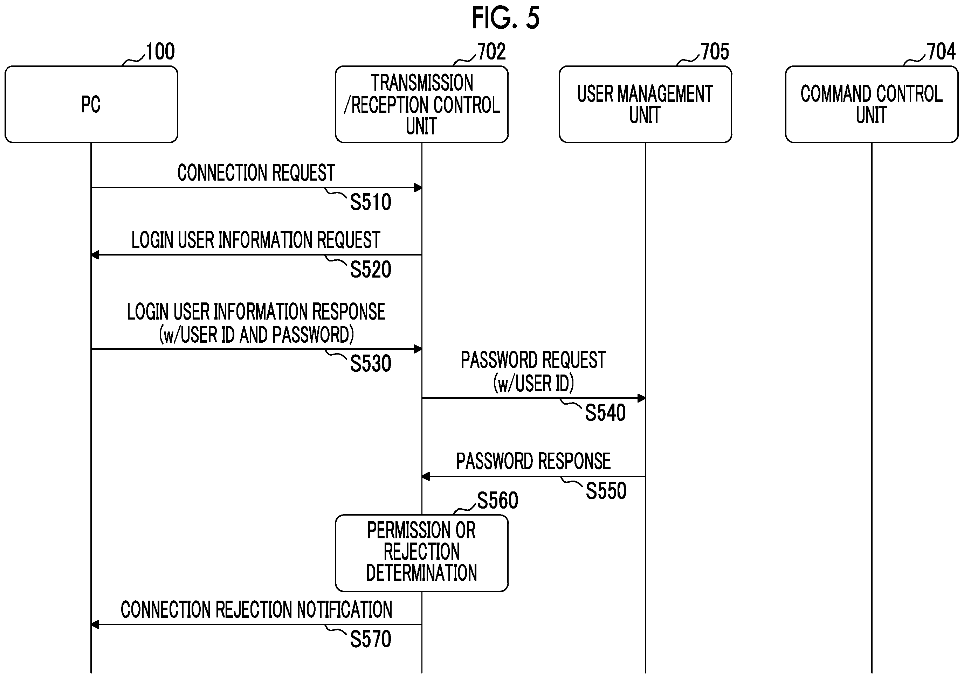

Fig. 5 is a sequence diagram showing an example of a series of processing operations of the injection molding machine 1, including the user authentication processing by the controller 70 (the transmission/reception control unit 702) shown in Fig. 4.

Referring to Fig. 5, the PC 100 transmits a connection request to the controller 70 (step S510).

If the transmission/reception control unit 702 receives the connection request from the PC 100 through a predetermined interface of the controller 70, the transmission/reception control unit 702 performs processing of transmitting a login user information request to the PC 100 (step S520).

Step S520 corresponds to step S102 in Fig. 4.

If the PC 100 receives the login information request from the controller 70 (the transmission/reception control unit 702), the PC 100 transmits a response signal (a login user information response) which includes the login user information (the user ID and the password) to the controller 70 (step S530).

If the transmission/reception control unit 702 receives the login user information response from the PC 100, the transmission/reception control unit 702 transmits a password request which includes the user ID of the login user information to the user management unit 705 (step S540).

The processing of step S540 corresponds to the processing of steps S104 to S106 in Fig. 4.

If the user management unit 705 receives the password request from the transmission/reception control unit 702, the user management unit 705 searches the user information DB 7051 for a registration status of the user ID which is included in the password request. Then, in a case where the user ID is registered, the user management unit 705 transmits a response signal (a password response) which includes the password corresponding to the user ID and the expiration date thereof, to the transmission/reception control unit 702 (step S550).

In a case where the user ID is not registered in the user information DB 7051, the user management unit 705 sends a response indicating that it is not registered to the transmission/reception control unit 702.

If the transmission/reception control unit 702 receives the password response from the user management unit 705, the transmission/reception control unit 702 determines whether to permit or reject connection, based on the content of the password response (stepS560) . Specifically, the transmission/reception control unit 702 determines whether to permit or reject connection, by performing the processing shown in steps S110 to S114 in Fig. 4 described above.

If the transmission/reception control unit 702 performs a determination to permit the connection, the transmission/reception control unit 702 transmits a connection permission notification to the PC 100 (step S570).

The processing of step S570 corresponds to the processing of step S116 in Fig. 4. Further, as described above, if the transmission/reception control unit 702 performs a determination to reject the connection, the transmission/reception control unit 702 transmits a connection rejection notification to the PC 100.

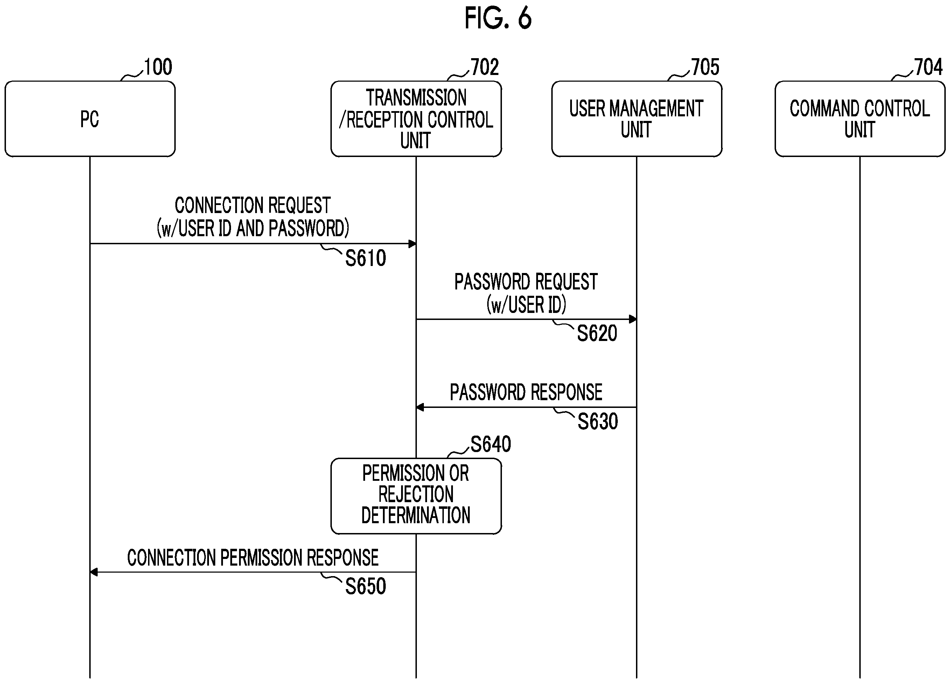

In this example (Figs. 4 and 5), the transmission/reception control unit 702 receives the connection request from the PC 100 and then requests the login user information (the user ID and the password) from the PC 100. However, the login user information may be included in the connection request. Hereinafter, another example will be described with reference to Fig. 6.

Fig. 6 is a sequence diagram showing another example of a series of processing operations of the injection molding machine 1, including the user authentication processing by the controller 70 (the transmission/reception control unit 702).

Referring to Fig. 6, the PC 100 transmits a connection request which includes login user information (a user ID and a password) to the controller 70 (step S610).

If the transmission/reception control unit 702 receives the connection request from the PC 100, the transmission/reception control unit 702 transmits a password request which includes the user ID of the login user information which is included in the connection request, to the user management unit 705 (step S620).

The processing of step S620 corresponds to the processing of step S106 in Fig. 4, and in the case of this example, the processing of steps S102 and S104 in Fig. 4 is omitted.

Since the processing of steps S630 to S650 is the same as the processing of steps S550 to S570 in Fig. 5, description thereof is omitted.

In this manner, in this embodiment, the user management unit 705 of the controller 70 of the main body 2 manages the registered user information of a user who performs the operation related to the operation of the working unit 3 by using the PCs 100and200. Then, the controller 70 (the transmission/reception control unit 702) of the main body 2 performs a user authentication (that is, a determination to permit or reject the connection from the PC 100 to the controller 70), based on the registered user information which is managed by the user management unit 705 (that is, registered in the user information DB 7051) and the login user information which is input from the PC 100. Therefore, even if the PC 100 can be illegally operated via the communication network 150 from the PC 200, since the main body 2 side, specifically, the controller 70 of the main body 2 performs the user authentication, it is possible to prevent the working unit 3 from being easily operated via the communication network 150.

Further, as described above, the user management unit 705 manages the registered user information in an aspect in which the remote user and the local user can be distinguished from each other, specifically, in an aspect in which the user attribute representing distinction between the remote user and the local user is included in the registered user information. Therefore, the user management unit 705 can make a situation in which it is more difficult for the remote user who uses the PC 200 to connect to the controller 70 than in the local user who uses the PC 100. Specifically, the user management unit 705 provides the remote user with a password that is not set for the local user, as described above, or provides the remote user with an expiration date of the password, which expires earlier than that for the local user. In this way, a situation can be suppressed in which a user who uses the PC 200 in an environment where the main body 2 cannot be visually recognized can easily perform the operation related to the operation of the working unit 3, in particular, the operation for causing the working unit 3 to execute work (the first operation) or the operation for allowing the working unit 3 to execute work (the fifth operation).

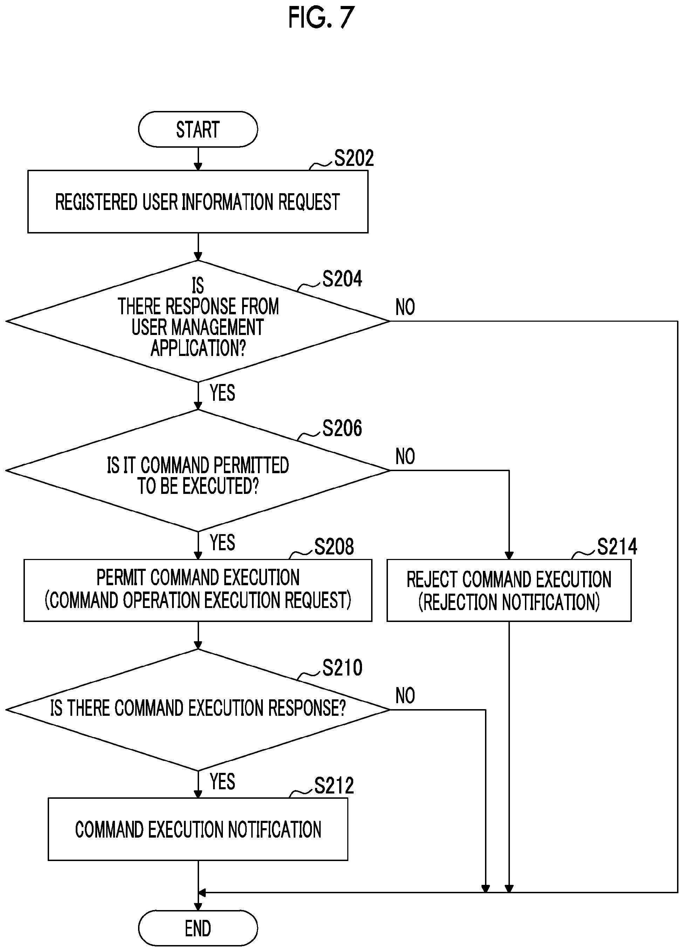

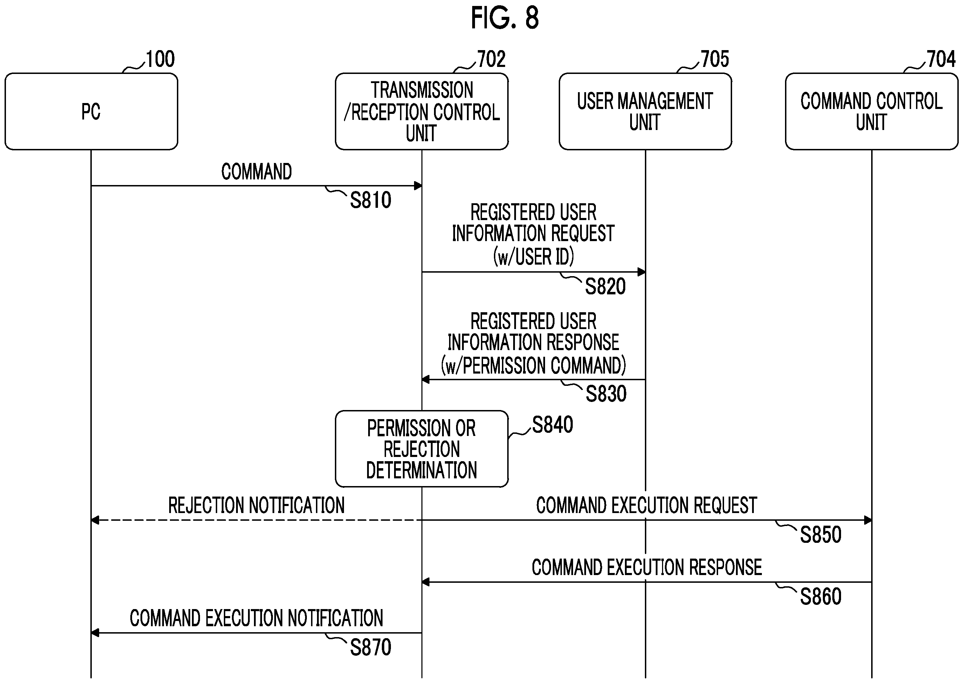

Subsequently, a processing operation related to a command which is input from the PC 100 to the controller 70 will be described with reference to Figs. 7 and 8.

Fig. 7 is a flowchart showing an example of command processing by the controller 70 (the transmission/reception control unit 702). This flowchart is executed if a command is input from the PC 100 to which the connection has been permitted by the processing of the flowchart of Fig. 4.

In step S202, the transmission/reception control unit 702 transmits a signal requesting the registered user information (a registered user information request), specifically, a registered user information request which includes the user ID of the login user information, to the user management unit 705.

In step S 204, the transmission/reception control unit 702 determines whether or not there is a response from the user management unit 705. In a case where there is a response from the user management unit 705, the transmission/reception control unit 702 proceeds to step S206, and in a case where there is no response for some reason, the transmission/reception control unit 702 ends this processing.

If the user management unit 705 receives the registered user information request from the transmission/reception control unit 702, the user management unit 705 transmits a response signal (a registered user information response) which includes the registered user information corresponding to the user ID of the login user information which is included in the registered user information request, to the transmission/reception control unit 702. Further, in a case where there is no response from the user management unit 705, the transmission/reception control unit 702 may transmit the registered user information request again, and may cause the display unit 80 to display the fact that there is some abnormality.

In step S206, the transmission/reception control unit 702 determines whether or not the command from the PC 100 is a permission command, based on the content of the response from the user management unit 705, that is, the registered user information which is included in the registered user information response. In a case where the command from the PC 100 is a permission command, the transmission/reception control unit 702 proceeds to step S208, and in a case where it is not a permission command (that is, it is a rejection command), the transmission/reception control unit 702 proceeds to step S214.

In step S208, the transmission/reception control unit 702 permits command execution and transmits a command execution request to the command control unit 704.

In step S210, the transmission/reception control unit 702 determines whether or not there is a command execution response from the command control unit 704. In a case where there is a command execution response from the command control unit 704, the transmission/reception control unit 702 proceeds to step S212, and in a case where there is no response for some reason, the transmission/reception control unit 702 ends this processing.

In a case where there is no command execution response from the command control unit 704, the transmission/reception control unit 702 may transmit a command execution request to the command control unit 704 again and may cause the display unit 80 to display the fact that there is some abnormality.

In step S212, the transmission/reception control unit 702 transmits a notification of command execution (command execution notification) to the PC 100 and ends this processing.

On the other hand, if a determination that the command from the PC 100 is a rejection command is made in step S206, in step S214, the transmission/reception control unit 702 rejects command execution and transmits a command execution rejection notification to the PC 100.

Fig. 8 is a sequence diagram showing an example of a series of processing operations of the injection molding machine 1, including the command processing by the controller 70 (the transmission/reception control unit 702) shown in Fig. 7.

Referring to Fig. 8, the PC 100 transmits a command input by a user to the controller 70 (step S810).

If the transmission/reception control unit 702 receives a command from the PC 100, the transmission/reception control unit 702 transmits a registered user information request which includes the user ID of the login user information, to the user management unit 705 (step S820).

The processing of step S820 corresponds to the processing of step S202 in Fig. 7.

If the user management unit 705 receives the registered user information request from the transmission/reception control unit 702, the user management unit 705 acquires the registered user information corresponding to the user ID of the login user information which is included in the registered user information request, from the user information DB 7051. Then, the user management unit 705 transmits a registered user information response which includes some (including at least a permission command) or the whole of the acquired registered user information, to the transmission/reception control unit 702 (step S830).

If the transmission/reception control unit 702 receives the registered user information response from the user management unit 705, the transmission/reception control unit 702 determines whether or not to permit execution of the command (a determination of whether to permit or reject execution of the command), based on the content of the registered user information response (that is, the registered user information which includes at least the permission command) (step S840). Specifically, the transmission/reception control unit 702 performs the processing of step S206 in Fig. 7 described above, thereby performing a determination of whether to permit or reject execution of the command.

If the transmission/reception control unit 702 permits the execution of the command input from the PC 100, the transmission/reception control unit 702 transmits a command execution request to the command control unit 704 (step S850).

The processing of step S850 corresponds to the processing of step S208 in Fig. 7.

If the command control unit 704 receives the command execution request from the PC 100, the command control unit 704 executes the command. Then, the command control unit 704 transmits a command execution response to the transmission/reception control unit 702 (step S860).

If the transmission/reception control unit 702 receives the command execution response from the command control unit 704, the transmission/reception control unit 702 transmits a command execution notification to the PC 100 (step S870).

The processing of step S870 corresponds to the processing of steps S210 and S212 in Fig. 7.

In this manner, in this embodiment, the controller 70 makes a controllable content with respect to the working unit 3 and the controller 70 different between the case of the operation input from the PC 100 and the case of the operation input from the PC 200. Specifically, the user management unit 705 manages the registered user information in an aspect in which the remote user and the local user can be distinguished from each other, and the controller 70 controls the working unit 3, based on the login user information which is input from the PC 100 and the registered user information. More specifically, the controller 70 collates the login user information with the registered user information. Then, in a case where the login user information (the user ID) indicates that it is the local user, the controller 70 permits execution of all the controllable contents (the first operation to the sixth operation, or the third operation to the sixth operation) . On the other hand, in a case where the login user information (the user ID) indicates that it is the remote user, even if the operation for causing the working unit 3 to execute work (the first operation), the operation for changing the molding condition (the second operation), and the operation for changing the program data for causing the working unit 3 to execute work (the fifth operation) are performed, the controller 70 rejects the execution.

There can be a case of remotely operating the injection molding machine 1 (the main body 2) and the like via a network by using a terminal such as the PC 200. Specifically, it is a case such as checking the operation history data or the like of the injection molding machine 1 or the like from a remote place and performing maintenance such as repair and inspection. Such a case, there is a possibility that the injection molding machine or the like is operated via a network in a situation where there is no worker at the site, that is, near the main body 2 of the injection molding machine 1, so that the injection molding machine 1 (the working unit 3) performs actual work (for example, work to produce a molding product).

In contrast, in this embodiment, it is possible to prevent a user who uses the PC 200 in an environment where the main body 2 cannot be visually recognized from performing the operation for causing the working unit 3 to execute work (the first operation), the operation for changing the molding condition when the working unit 3 performs work (the second operation), and the operation for changing the program data for causing the working unit 3 to execute work (the fifth operation), among the operations related to the operation of the working unit 3. For this reason, it is possible to prevent actual work from being performed in a situation where there is no worker at the site, according to the operation via the network. In this way, it is possible to secure safety by restricting the operation content of the working unit 3 from the PC 200 which is connected through the communication network 150 from a place where the main body 2 cannot be visually recognized.

Further, even in a case of indicating that the login user information (the user ID) is the remote user, for example, if operations for requesting reference (disclosure) of various kinds of data such as the third operation, the fourth operation, and the sixth operation are performed, the controller 70 permits the execution. In this way, it is possible to refer to the operation information or the like of the working unit 3 even from the PC 200 which is connected from a place where the main body 2 cannot be visually recognized, and therefore, it ispossible to secure user convenience such as being able to perform maintenance from a remote place, for example. That is, according to this embodiment, it is possible to achieve both safety and user convenience.

In other words, the PC 100 which a user uses in an environment where the main body 2 can be visually recognized can cause all the operation contents which the controller 70 or the working unit 3 can execute based on the operation input from the PC 200 to be executed in the controller 70 or the working unit 3, based on the operation input from the PC 100 itself. Further, it is possible to cause an operation content which the controller 70 or the working unit 3 cannot execute based on the operation input from the PC 200 to be executed in the controller 70 or the working unit 3, based on the operation input from the PC 100 itself. In this way, it is possible to achieve both safety and user convenience.

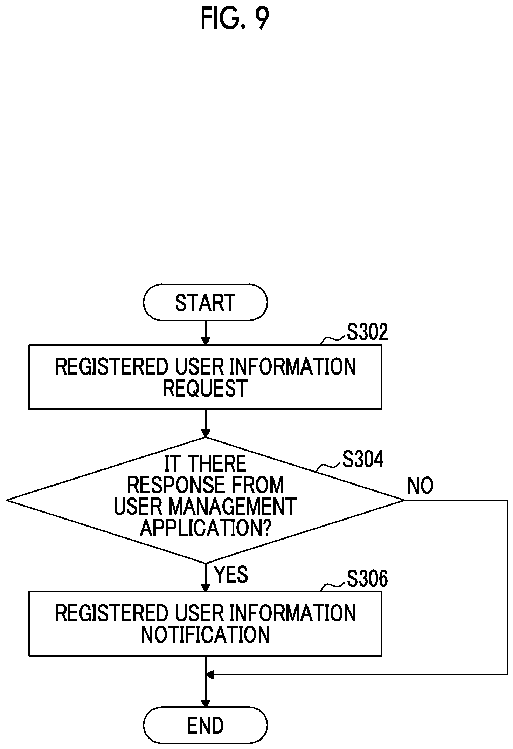

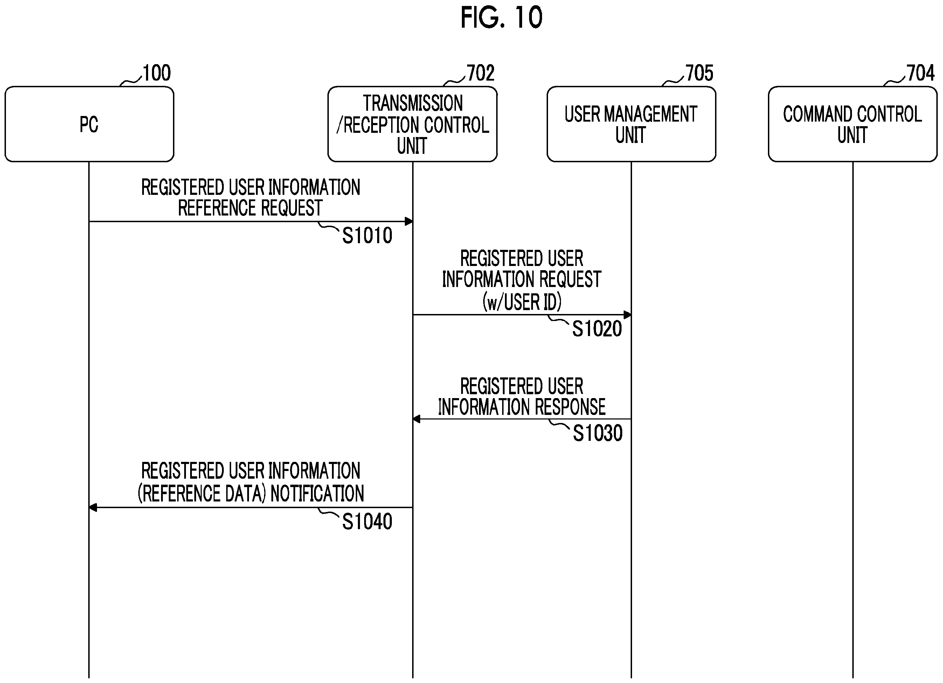

Subsequently, the processing operation related to a registered user information reference request which is input from the PC 100 to the controller 70 will be described with reference to Figs. 9 and 10.

Fig. 9 is a flowchart showing an example of registered user information reference processing by the controller 70 (the transmission/reception control unit 702). This flowchart is executed if a request to refer to the registered user information (a registered user information reference request) is input from the PC 100 to which the connection has been permitted by the processing of the flowchart of Fig. 4.

In step S 302, the transmission/reception control unit 702 transmits a signal requesting the registered user information (a registered user information request), specifically, a registered user information request which includes the user ID of the login user information, to the user management unit 705.

In step S 304, the transmission/reception control unit 702 determines whether or not there is a response from the user management unit 705. In a case where there is a response from the user management unit 705, the transmission/reception control unit 702 proceeds to step S306, and in a case where there is no response for some reason, the transmission/reception control unit 702 ends this processing.

If the user management unit 705 receives the registered user information request from the transmission/reception control unit 702, the user management unit 705 transmits a response signal (a registered user information response) which includes the registered user information corresponding to the user ID of the login user information which is included in the registered user information request, to the transmission/reception control unit 702. Further, in a case where there is no response from the user management unit 705, the transmission/reception control unit 702 may transmit the registered user information request again, may cause the display unit 80 to display the fact that there is some abnormality, and may transmit a notification to the effect that the registered user information reference is impossible to the PC 100.

In step S 306, the transmission/reception control unit 702 transmits a signal notifying of the registered user information (reference data) (a registered user information notification) to the PC 100, and ends this processing.

Fig. 10 is a sequence diagram showing an example of a series of processing operations of the injection molding machine 1, including the registered user information reference processing by the controller 70 (the transmission/reception control unit 702) shown in Fig. 9.

The PC 100 transmits a registered user information reference request to the controller 70 according to the input from the user (step S1010).

If the transmission/reception control unit 702 receives the registered user information reference request from the PC 100, the transmission/reception control unit 702 transmits a registered user information request which includes the user ID of the login user information to the user management unit 705 (step S1020).

The processing of step S1020 corresponds to the processing of step S302 in Fig. 9.

If the user management unit 705 receives the registered user information request from the transmission/reception control unit 702, the user management unit 705 acquires the registered user information corresponding to the user ID of the login user information which is included in the registered user information request, from the user information DB 7051. Then, the user management unit 705 transmits a registered user information response which includes the acquired registered user information to the transmission/reception control unit 702 (step S1030).

If the transmission/reception control unit 702 receives the registered user information response from the user management unit 705, the transmission/reception control unit 702 transmits a signal notifying of the registered user information (reference data) which is included in the registered user information response (a registered user information notification) to the PC 100 (step S1040).

The processing of step S1040 corresponds to the processing of steps S304 and S306 in Fig. 9.

In this manner, in this embodiment, the controller 70 discloses the registered user information (reference data) related to the authenticated (logged-in) user on the PC 100 according to the reference request from the PC 100. In this way, the user can confirm his/her registered user information.

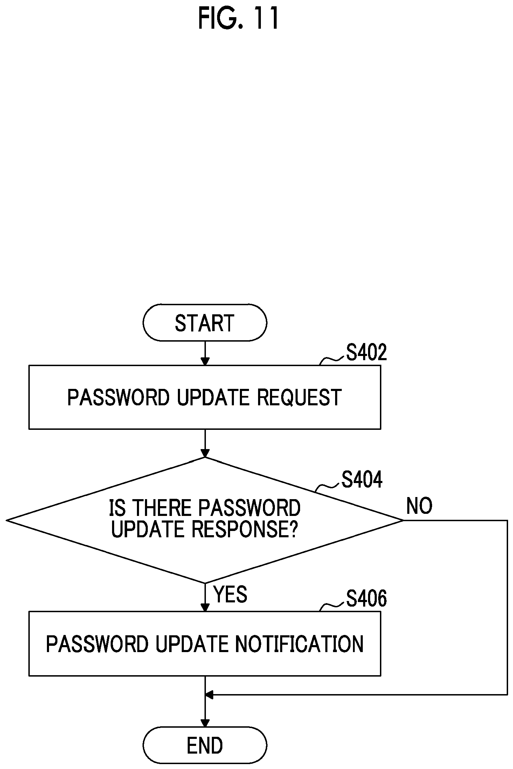

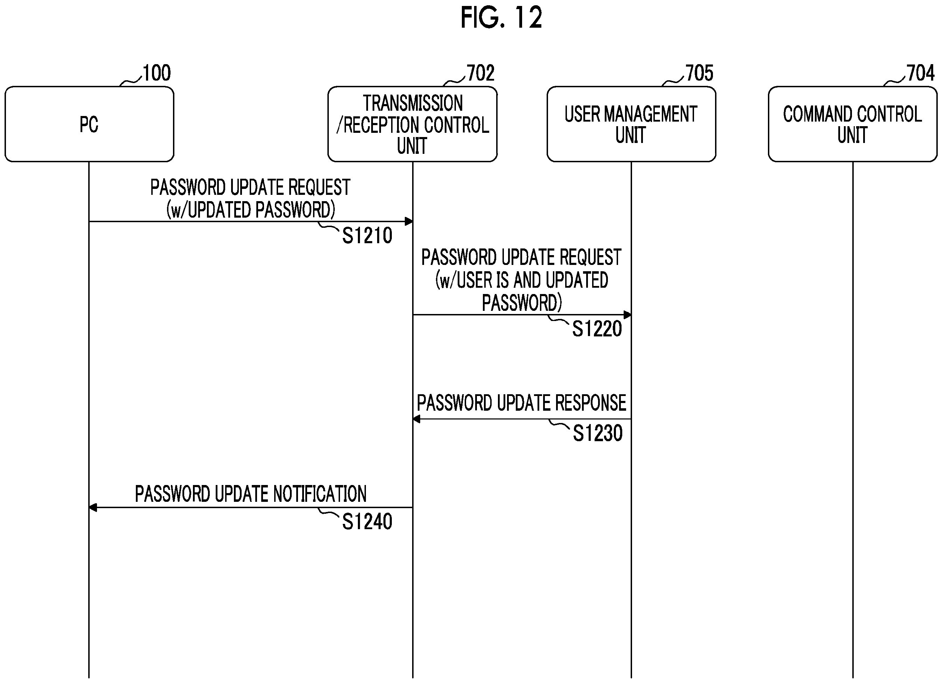

Subsequently, the processing operation related to a registered user information (specifically, password) update request which is input from the PC 100 to the controller 70 will be described with reference to Figs. 11 and 12.

Fig. 11 is a flowchart showing an example of registered user information update processing by the controller 70 (the transmission/reception control unit 702). This flowchart is executed if a request (a password update request) to update a password which includes a password after update (an updated password) is input from the PC 100 to which the connection has been permitted by the processing of the flowchart of Fig. 4.

In step S 402, the transmission/reception control unit 702 transmits a signal requesting password update (a registered user information request), specifically, a password update request which includes the user ID of the login user information and an updated password, to the user management unit 705.

In step S 404, the transmission/reception control unit 702 determines whether or not there is a response from the user management unit 705. In a case where there is a response from the user management unit 705, the transmission/reception control unit 702 proceeds to step S406, and in a case where there is no response for some reason, the transmission/reception control unit 702 ends this processing.

If the user management unit 705 receives the password update request from the transmission/reception control unit 702, the user management unit 705 updates the password of the registered user information corresponding to the user ID of the login user information which is included in the password update request to the content of the updates password in the user information DB 7051. Then, the user management unit 705 transmits a response signal (a password update response) indicating that the password of the registered user information has been updated to the transmission/reception control unit 702. Further, in a case where there is no response from the user management unit 705, the transmission/reception control unit 702 may transmit the registered user information request again, may cause the display unit 80 to display the fact that there is some abnormality, and may transmit a notification to the effect that the update of the password is impossible to the PC 100.

In step S 406, the transmission/reception control unit 702 transmits a signal (a password update notification) notifying that the password has been updated to the PC 100, and ends this processing.

Fig. 12 is a sequence diagram showing an example of a series of processing operations of the injection molding machine 1, including the registered user information update processing by the controller 70 (the transmission/reception control unit 702) shown in Fig. 11.

The PC 100 transmits a password update request to the controller 70 according to the input from the user (step S1210) .

If the transmission/reception control unit 702 receives the password update request which includes the updated password from the PC 100, the transmission/reception control unit 702 transmits a password update request which includes the user ID of the login user information and the updated password to the user management unit 705 (step S1220).

The processing of step S1220 corresponds to the processing of step S402 in Fig. 11.

If the user management unit 705 receives the password update request from the transmission/reception control unit 702, the user management unit 705 updates the password of the registered user information corresponding to the user ID of the login user information which is included in the password update request to the content of the updated password in the user information DB 7051. Then, the user management unit 705 transmits a password update response to the transmission/reception control unit 702 (step S1230).

If the transmission/reception control unit 702 receives the password update response from the user management unit 705, the transmission/reception control unit 702 transmits a password update notification to the PC 100 (step S1240).

The processing of step S1040 corresponds to the processing of steps S404 and S406 in Fig. 11.

In this manner, in this embodiment, the controller 70 updates the registered user information, specifically, the password, related to the authenticated (logged-in) user, according to the update request from the PC 100. In this way, the user himself/herself can update the authentication password associated with the user ID. In particular, with respect to the remote user, an expiration date is set or an expiration date expires earlier than that of the local user, as described above, and therefore, the remote user himself/herself can update the password, so that it is possible to suppress a decrease in the remote user convenience.

The embodiment of the present invention has been described in detail above. However, the present invention is not limited to such a specific embodiment, and various modifications and changes can be made within the scope of the present invention as stated in the claims.

For example, in the embodiment described above, the PC 100 has a configuration in which it can operate one main body 2 (working unit 3). However, it may be replaced with a terminal which operates a plurality of main bodies 2 as operation targets.

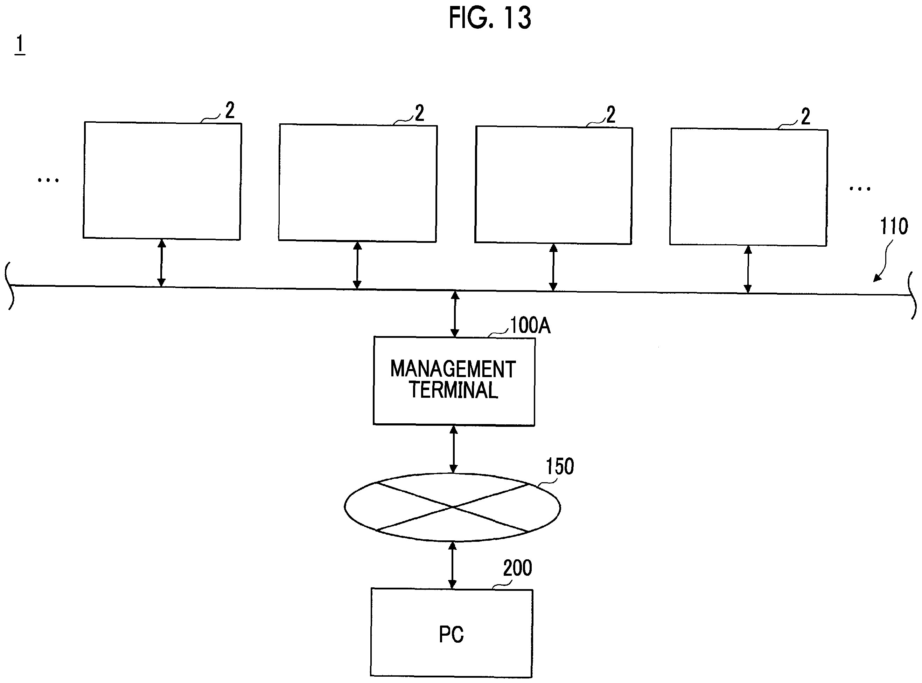

Here, Fig. 13 is a diagram showing another example of the configuration of the operation system of the injection molding machine 1 according to this embodiment. This example is different from the above-described example (refer to Fig. 2) in that the PC 100 is replaced with a management terminal 100A and the management terminal 100A operates a plurality of main bodies 2 as operation targets.

Since the configurations (theworkingunit3, the controller 70, and the display unit 80) which are included in the main body 2 in this example are the same as those in the above-described example, illustration thereof is omitted.

As shown in Fig. 13, the management terminal 100A (another example of the first terminal) is communicably connected to the plurality of main bodies 2 (specifically, the respective controllers 70) through a local network 110. The management terminal 100A may be, for example, a stationary type terminal which is provided in a control room or the like inside the factory in which the plurality of main bodies 2 are installed (hereinafter simply referred to as a factory), or may be a portable terminal such as a tablet type terminal which an administrator or the like can carry when the administrator or the like moves inside the factory. The local network 110 may be, for example, a local area network (LAN) based on an Ethernet protocol disposed in a building of the factory, or may be a wired LAN or a wireless LAN.

The management terminal 100A manages the plurality of main bodies 2. Specifically, the management terminal 100A receives information (operation information) on an operating state, a production progress state, a quality state of a molding product, a setting state of a molding condition, the presence or absence of an abnormal state (presence or absence of abnormality alarm occurrence), or the like, which is transmitted from each of the plurality of main bodies 2. In this way, the management terminal 100A can manage an operation status (for example, an operation rate, a stop history, the number of times of stopping, a cycle time, the number of production shots, or the like), a production progress status, a quality state of a molding product, a setting state of a molding condition, or the like in each of the plurality of main bodies 2.

Further, the management terminal 100A has an operation application installed therein, similar to the PC 100 in the example described above. Then, the management terminal 100A can output a command which includes the operation input to the controller 70 of each of the plurality of main bodies 2, according to the direct operation of the local user on the management terminal 100A or the operation of the remote user in the PC 200. Then, the controller 70 of each main body 2 makes a control aspect of the working unit 3, that is, an operable content related to the operation of the working unit 3 different between the case of the direct operation input from the management terminal 100A and the case of the operation input by a remote operation from the PC 200, similar to the case of the example described above. Specifically, the controller 70 changes the control aspect related to whether or not to cause the working unit 3 to execute actual work, when there is operation input to cause the working unit 3 to execute work or to allow the working unit 3 to execute work. In this way, similar to the case of the example described above, even if the management terminal 100A can be illegally operated from the PC 200 via the communication network 150, that is, the global network outside the factory, since each main body 2 side, specifically, the controller 70 of eachmainbody 2 performs a user authentication, it is possible to prevent the working unit 3 from being easily operated via the global network.

body 2 performs a user authentication, it is possible to prevent the working unit 3 from being easily operated via the global network.

On the other hand, the management terminal 100A is used in relatively close to the plurality of main bodies 2 in the factory, even if it is either a stationary type terminal or a portable terminal, and a local user who directly operates the management terminal 100A can visually recognize the status of each main body 2 at the site. Therefore, even if the working unit 3 is operated by the direct operation of the management terminal 100A by the local user, there is no problem.

Further, in this example, the management terminal 100A may be configured to be directly connected to the plurality of main bodies 2 on a one-to-one basis, similar to the PC 100 shown in the above-described example. Further, the PC 200 in this example may be configured to be able to output operation input to only some of the main bodies 2 among the plurality of main bodies 2 through the management terminal 100A. That is, the PC 200 may have an aspect in which an operable target among the plurality of main bodies 2 is restricted (limited), in addition to the operation related to the operation of the working unit 3 being restricted. In this case, the management terminal 100A may deal with it by limiting an output target of the operation input in the case of login from the PC 200. Further, in this case, on the premise that access information (for example, a dedicated code or the like) for communicably connecting to the controller 70 of the main body 2, which is given to a predetermined user in association with each main body 2, is defined in advance, the controller 70 of each main body 2 may have an aspect of permitting access by the PC 200, in a case where access information associated with the main body 2 including the controller 70 itself is included in an access request which is input from the PC 200. That is, by access information which is given in association with each of some of the main bodies 2 by a specific user who is permitted to access some of the main bodies 2 being input by the PC 200, access information registered in advance in the PC 200 being automatically read, or the like, the user can access the controllers 70 of some of the main bodies 2 to perform the operations related to the operation of the working unit 3.

Further, for example, in the above-described embodiment or the like, the PC 200 is connected to the PC 100 through the communication network 150, and the remote user who uses the PC 200 performs the operation related to the operation of the working unit 3 of the main body 2 by remotely operating the PC 100. However, the PC 200 may be directly connected to the main body 2 in a manner communicable with the PC 100 through the communication network 150 without intervention of the PC 100.

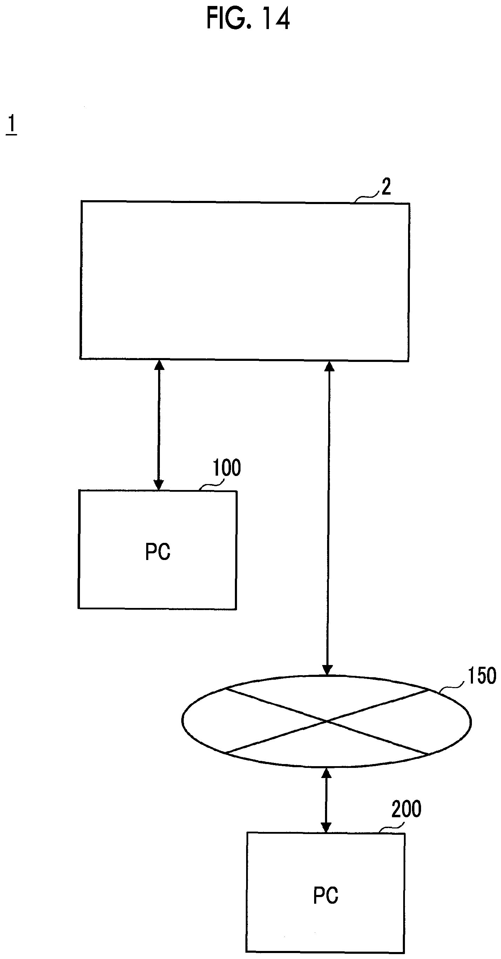

Here, Fig. 14 shows still another example of the configuration of the operation system of the injection molding machine 1 according to this embodiment. This example is different from the above-described example in that the PC 200 is directly connected to the main body 2 through the communication network 150 without intervention of the PC 100.

Since the configurations (theworkingunit3, the controller 70, and the display unit 80) which are included in the main body 2 in this example are the same as those in the above-described example or the like, illustration thereof is omitted.

In this example, the PC 200 has an operation application installed therein, similar to the PC 100, and it is possible to output a command which includes operation input to the controller 70 through the operation application.

The controller 70 of the main body 2 makes the control aspect of the working unit 3, that is, the controllable content related to the operation of the working unit 3 different by discriminating between the user ID of the local user, which is input from the PC 100, and the user ID of the remote user, which is input from the PC 200, similar to the case of the above-described example. In this way, similar to the case of the above-described example, even if the operation input can be illegally output from the PC 200 to the main body 2 via the communication network 150, that is, the global network outside the factory, since the main body 2 side, specifically, the controller 70 of the main body 2 performs a user authentication, it is possible to prevent the working unit 3 from being easily operated via the global network.

Further, for example, in the above-described embodiment or the like, in the PC 200 which is communicably connected to the controller 70 via the global network such as the internet, the operation related to the operation of the working unit 3 is restricted, unlike the case of the PC 100. However, there is no limitation to the aspect.

Specifically, in a case where there is a terminal such as a PC which is communicably connected to the controller 70 via a local network, that is, an external network, other than a local network related to a domain to which the controller 70 or the PC 100 belongs, among a plurality of local networks in the factory, divided into domains, the operation related to the operation of the working unit 3 maybe restricted with respect to the terminal as well. This is because even in the local network in the factory, there is a possibility that a terminal in a different domain from the controller 70 of the main body 2 or the PC 100, which becomes a target, may be physically separated from the main body 2. Further, in a case where there is a terminal such as a PC which is communicably connected to the controller 70 via the local network of the same domain as the domain to which the controller 70 or the PC 100 belongs, the operation related to the operation of the working unit 3 may be restricted with respect to the terminal as well. This is because even in the terminal belonging to the local network of the same domain as the controller 70 or the PC 100, depending on the size or the like of a physical area which is covered by the domain, the terminal and the main body 2 are physically too far apart from each other, so that a situation in which a user of the terminal cannot easily visually recognize the status of the main body 2 can be assumed.

On the other hand, like a terminal such as the management terminal 100A described above, if it is a terminal belonging to the local network in the factory, in many cases, the status of the main body 2 can be easily grasped. For this reason, an aspect is also acceptable in which the restriction of the operation related to the operation of the working unit 3 is applied only to a terminal which is connected to the controller 70 via either of the external network or the global network, or a terminal which is connected to the controller 70 via the global network.

That is, the condition of a predetermined network through which a terminal to which the restriction of the operation related to the operation of the working unit 3 is applied goes may be appropriately determined in an aspect including any one of the network of the same domain as the controller 70 or the like, the external network, and the global network, in consideration of the positional relationship between the main body 2 and the physical range of the assumed network, or the like.

Further, for example, in the above-described embodiment or the like, the controller 70 discriminates between a command which includes the operation input from the PC 100, the management terminal 100A, or the like and a command which includes the operation input from a terminal going through a predetermined network, such as the PC 200, based on the user information (a user ID, attribute information, or the like). However, there is no limitation to this aspect. Specifically, the controller 70 may discriminate between a command which includes the operation input from the PC 100, the management terminal 100A, or the like and a command which includes the operation input from a terminal going through a predetermined network, such as the PC 200, based on other identification information such as an IP address indicating a transmission source terminal, which is included in the operation input from a certain terminal. More specifically, in a case where a predetermined network which is a target to which the operation related to the operation of the working unit 3 is restricted is the global network, the controller 70 may perform discrimination, based on whether it is a local IP address of a domain corresponding to the PC 100 belonging to the local network disposed in the factory, or a global IP address of a domain corresponding to the PC 200 going through the communication network 150. Further, in a case where a predetermined network to be restricted is an external network (a local network of a different domain) of a local network to which the controller 70 or the like belongs, the controller 70 may perform discrimination, based on whether or not a local IP address of a transmission source of operation input corresponds to the same domain as the controller 70 or the like. In this case, the controller 70 may be configured to include a management unit which manages other identification information, instead of the user management unit 705 which includes the user information DB 7051.

Further, for example, in the above-described embodiment or the like, with respect to a terminal which is connected to the controller 70 via a predetermined network, such as the PC 200, an aspect is also acceptable in which as the operations for allowing the working unit 3 to execute work, the second operation and the fifth operation are restricted, but an operation related to the transmission of data which is the premise of the second operation or the fifth operation is permitted. For example, with respect to the terminal which is connected to the controller 70 via a predetermined network, such as the PC 200, an aspect is also acceptable in which the transmission of update information which includes program data for new installation, reinstallation, or update, or data related to a parameter such as a setting value of a molding condition, or the like to the controller 70 is permitted. On the other hand, as described above, with respect to the terminal which is connected to the controller 70 via a predetermined network, such as the PC 200, the second operation and the fifth operation are restricted, and therefore, it is not possible to perform an operation for validating the transmitted data, such as the input of the installation of the program or the data related to the parameter, as a molding condition. In this way, it is possible to secure safety while improving user convenience.

Further, in the above-described embodiment or the like, an operable content related to the operation of the working unit 3 is changed between a case of using the PC 100, the management terminal 100A, or the like and a case of using the terminal accessing the controller 70 via a predetermined network, such as the PC 200. However, in addition, the operable content may be changed according to other elements. Specifically, in the case of the operation input from the terminal going through a predetermined network, such as the PC 200, the controller 70 may change the operable content according to which user among a plurality of users registered in advance is a user who performs access. That is, an aspect is also acceptable in which an operable content (authority) is given for each of a plurality of users. Further, the controller 70 may change the operable content according to a situation in which a terminal which is an access source goes through a network, that is, according to a distinction such as whether the terminal goes through the global network, goes through the external network, or goes through the local network.

Further, in the above-described embodiment or the like, with respect to the terminal which is connected to the controller 70 via a predetermined network, such as the PC 200, among the operations related to the operation of the working unit 3, the operation for causing or allowing the working unit 3 to execute work is restricted. However, in addition, operation information which is disclosed by reference or the like may be restricted. That is, in the case of the operation input from the terminal which goes through a predetermined network, such as PC 200, the controller 70 permits the disclosure of at least part of the operation information of the working unit 3 on the terminal, based on the operation input, and on the other hand, the controller 70 may restrict the disclosure of operation information other than at least part of the operation information on the terminal and the operation related to the operation of the working unit 3 based on the operation input.

Further, in the above-described embodiment, the controller 70 may notify the terminal which is connected via a predetermined 3 based on the operation input.

Further, in the above-described embodiment, the controller 70 may notify the terminal which is connected via a predetermined network of only the content which can be controlled by the terminal or only the contents which cannot be controlled by the terminal, among all the control contents for the working unit 3 or the controller 70. In this case, the controller 70 may transmit a display output command to cause a notification content to be displayed on a displaypart (for example, a display) of the terminal, or a voice output command to cause a notification content to be output through a voice, together with the above notification to the terminal. In this way, a user of the terminal which is connected via a predetermined network can grasp a controllable content or a non-controllable content in advance, and thus convenience is improved.

Further, for example, in the above-described embodiment or the like, the PC 100, the PC 200, the management terminal 100A, or the like outputs a command which includes the operation input to the main body 2 of the injection molding machine 1. However, a configuration is also acceptable in which alternatively or in addition, a command which includes operation input related to an operation of a peripheral device (for example, an ejector, a conveyor, a pulverizer, or the like) of the main body 2 can be output. Also in this case, a controller which is mounted on the peripheral device and corresponds to the controller 70 of the main body 2 makes a control aspect of the peripheral device (a working unit), that is, a controllable content different, between the case of the operation input by a local user from the PC 100, the management terminal 100A or the like and the case of the operation input by a remote user from the terminal going through a predetermined network, such as the PC 200. In this way, similar to a case of controlling the main body 2 of the injection molding machine 1, even if the operation input can be output from the PC 200 to the communication network 150, that is, to the peripheral device via a predetermined network outside the factory, it is possible to prevent the peripheral device (working unit) from being easily operated via a predetermined network.

Further, for example, in the above-described embodiment or the like, the main body 2 (the working unit 3) of the injection molding machine 1 is set to be an operation target which can be operated from the PC 100, the PC 200, the management terminal 100A or the like. However, the injection molding machine 1 is an example of an industrial machine which includes a stationary type main body, and is not limited to this configuration. That is, the contents which are disclosed in the embodiment described above can be applied with a main body which includes a working unit performing predetermined work as an operation target which can be operated from the PC 100, the PC 200, the management terminal 100A, or the like.

### Brief Description of the Reference Symbols

- 1:: injection molding machine
- 2:: main body
- 3:: working unit
- 10:: plasticizing cylinder
- 20:: screw
- 21:: screw main body
- 22:: injection section
- 23:: flight section
- 24:: pressure section
- 26:: groove
- 52:: plasticizing motor
- 54:: injection motor
- 56:: pressure detector
- 60:: material supply unit
- 63:: feed cylinder
- 67:: feed screw
- 69:: feed motor
- 70:: controller (control unit)
- 72:: storage unit
- 74:: CPU
- 76:: timer
- 80:: display unit
- 100:: PC (first terminal)
- 100A:: management terminal (first terminal)
- 110:: local network
- 150:: communication network (predetermined network)
- 200:: PC (second terminal)
- 702:: transmission/reception control unit
- 704:: command control unit
- 705:: user management unit (management unit)
- 7051:: user information DB

## Claims

1. An injection molding machine (1) comprising:
a working unit (3) which includes an injection unit which fills a mold unit with a molding material, and performs work to produce a molding product from the molding material; and
a control unit (70) which controls the working unit (3),
wherein the control unit (70) is configured to make an operable content of the working unit (3) or the control unit (70) different between a case of operation input from a first terminal (100A) when the first terminal (100A) is communicably connected to the control unit (70) through a local network (110), and a case of operation input from a second terminal (200) when the second terminal (200) is communicably connected to the control unit (70) through a predetermined network (150),
wherein the operable content includes at least one operation related to an operation of the working unit (3), and
wherein the control unit (70) includes a management unit (705) which is configured to manage identification information for identifying whether or not a certain terminal is connected through the predetermined network (150), collates predetermined information which is input from a certain terminal with the identification information which is managed by the management unit (705), and determines an operable content via operation input from the terminal according to a collation result.

2. The injection molding machine (1) according to claim 1,
wherein each of the first terminal (100A) and the second terminal (200) is able to execute at least one operation content among a plurality of operation contents which are defined in advance with respect to the working unit (3) or the control unit (70) and to execute different operation contents, when a state where an operation of the working unit (3) or the control unit (70) is able to be executed is established.

3. The injection molding machine (1) according to claim 2,
wherein the plurality of operation contents include an operation for causing the working unit (3) to execute the work, an operation for changing a molding condition of the working unit (3), an operation for transmitting data of the molding condition to the control unit (70), an operation for referring to the molding condition of the working unit (3), an operation for referring to operation information of the working unit (3), an operation for setting software for causing the working unit (3) to execute work, an operation for transmitting data of the software to the control unit (70), and an operation for referring to data of the set software.

4. The injection molding machine (1) according to any one of claims 1 to 3,
wherein the predetermined network (150) includes the local network, an external network, and a global network.

5. The injection molding machine (1) according to any one of claims 1 to 4,
wherein the control unit (70) is configured to not cause the working unit (3) to execute the work, even if there is operation input to cause or allow the working unit (3) to execute the work from the terminal, when a state where an operation of the working unit (3) or the control unit (70) by the terminal is able to be executed is established, in a case where the predetermined information input from the terminal indicates that the terminal is connected through the predetermined network (150).

6. The injection molding machine (1) according to any one of claims 1 to 5,
wherein the control unit (70) is configured to notify the terminal of only a content which is operable when a state where an operation of the working unit (3) or the control unit (70) by the terminal is able to be executed is established, among all operation contents, or only a content which is non-operable when a state where an operation of the working unit (3) or the control unit (70) by the terminal is able to be executed is established, in a case where the predetermined information input from the terminal indicates that the terminal is connected through the predetermined network (150).

7. The injection molding machine (1) according to any one of claims 1 to 6,
wherein the identification information which is managed by the management unit (705) includes an identifier specific to each user and attribute information.

8. The injection molding machine (1) according to any one of claims 1 to 7,
wherein the control unit (70) changes an operable content according to a user who uses the second terminal (200), or according to a status of going through a network between the second terminal (200) and the control unit (70), in the case of the operation input from the second terminal (200), when a state where an operation of the working unit (3) or the control unit (70) by the second terminal (200) is able to be executed is established.

9. The injection molding machine (1) according to any one of claims 1 to 8,
wherein the control unit (70) permits, in the case of the operation input from the second terminal (200), disclosure of at least part of operation information of the working unit (3) on the second terminal (200), based on the operation input.

10. The injection molding machine (1) according to any one of claims 1 to 9,
wherein the control unit (70) restricts, in the case of the operation input from the second terminal (200), at least a part of an operation related to an operation of the working unit (3) based on the operation input.

11. The injection molding machine (1) according to any one of claims 1 to 10, further comprising:
a plurality of main bodies (2) which each include the working unit (3) and the control unit (70),
wherein access information for communicable connection to the control unit (70) of each of the main bodies (2), which is given to a predetermined user in association with each of the main bodies (2), is defined in advance, and
each of the control units (70) which are included in the plurality of main bodies (2) permits access of the terminal in a case where the access information associated with the main body (2) which includes itself is included in an access request which is input from a certain terminal through the predetermined network (150).

## Patentansprüche

1. Spritzgießmaschine (1), umfassend:
eine Arbeitseinheit (3), die eine Einspritzeinheit umfasst, die eine Formeinheit mit einem Formmaterial befüllt, und Arbeit verrichtet, um ein Formerzeugnis aus dem Formmaterial herzustellen; und
eine Steuerungseinheit (70), die die Arbeitseinheit (3) steuert,
wobei die Steuerungseinheit (70) konfiguriert ist, einen bedientauglichen Inhalt der Arbeitseinheit (3) oder der Steuerungseinheit (70) zwischen einem Fall einer Bedieneingabe von einem ersten Endgerät (100A), wenn das erste Endgerät (100A) durch ein lokales Netzwerk (110) kommunizierbar mit der Steuerungseinheit (70) verbunden ist, und einem Fall einer Bedieneingabe von einem zweiten Endgerät (200), wenn das zweite Endgerät (200) durch ein vorbestimmtes Netzwerk (150) kommunizierbar mit der Steuerungseinheit (70) verbunden ist, verschieden zu machen,
wobei der bedientaugliche Inhalt mindestens eine Bedienung im Zusammenhang mit einer Bedienung der Arbeitseinheit (3) ist, und
wobei die Steuerungseinheit (70) eine Verwaltungseinheit (705) umfasst, die konfiguriert ist, Identifikationsinformationen zum Identifizieren, ob ein bestimmtes Endgerät durch das vorbestimmte Netzwerk (150) verbunden ist oder nicht, zu verwalten, vorbestimmte Informationen, die von einem bestimmten Endgerät eingegeben werden, mit den Identifikationsinformationen, die von der Verwaltungseinheit (705) verwaltet werden, kollationiert, und via eine Bedieneingabe von dem Endgerät gemäß einem Kollationsergebnis einen bedientauglichen Inhalt bestimmt.

2. Spritzgießmaschine (1) nach Anspruch 1,
wobei das erste Endgerät (100A) und das zweite Endgerät (200) jeweils in der Lage ist, mindestens einen Bedieninhalt unter mehreren Bedieninhalten auszuführen, die im Voraus in Bezug auf die Arbeitseinheit (3) oder die Steuerungseinheit (70) definiert werden, und unterschiedliche Bedieninhalte auszuführen, wenn ein Zustand hergestellt ist, in dem eine Bedienung der Arbeitseinheit (3) oder der Steuerungseinheit (70) ausgeführt werden kann.

3. Spritzgießmaschine (1) nach Anspruch 2,
wobei die mehreren Bedieninhalte eine Bedienung, die bewirkt, dass die Arbeitseinheit (3) die Arbeit ausführt, eine Bedienung zum Ändern einer Formbedingung der Arbeitseinheit (3), eine Bedienung zum Übermitteln von Daten der Formbedingung an die Steuerungseinheit (70), eine Bedienung zum Bezugnehmen auf die Formbedingung der Arbeitseinheit (3), eine Bedienung zum Bezugnehmen auf Bedieninformationen der Arbeitseinheit (3), eine Bedienung zum Einstellen von Software, um zu bewirken, dass die Arbeitseinheit (3) Arbeit ausführt, eine Bedienung zum Übermitteln von Daten der Software an die Steuerungseinheit (70), und eine Bedienung zum Bezugnehmen auf Daten der eingestellten Software, umfassen.

4. Spritzgießmaschine (1) nach einem der Ansprüche 1 bis 3,
wobei das vorbestimmte Netzwerk (150) das lokale Netzwerk, ein externes Netzwerk und ein globales Netzwerk umfasst.

5. Spritzgießmaschine (1) nach einem der Ansprüche 1 bis 4,
wobei die Steuerungseinheit (70) konfiguriert ist, nicht zu bewirken, dass die Arbeitseinheit (3) die Arbeit ausführt, selbst wenn es eine Bedieneingabe gibt, um zu bewirken oder zu erlauben, dass die Arbeitseinheit (3) die Arbeit von dem Endgerät ausführt, wenn ein Zustand hergestellt ist, in dem eine Bedienung der Arbeitseinheit (3) oder der Steuerungseinheit (70) durch das Endgerät ausgeführt werden kann, in einem Fall, in dem die vorbestimmte Informationseingabe von dem Endgerät angibt, dass das Endgerät durch das vorbestimmte Netzwerk (150) verbunden ist.

6. Spritzgießmaschine (1) nach einem der Ansprüche 1 bis 5,
wobei die Steuerungseinheit (70) konfiguriert ist, das Endgerät nur über einen Inhalt, der bedientauglich ist, wenn ein Zustand hergestellt ist, in dem unter allen Bedieninhalten eine Bedienung der Arbeitseinheit (3) oder der Steuerungseinheit (70) durch das Endgerät ausgeführt werden kann, oder nur über einen Inhalt, der nicht bedientauglich ist, wenn ein Zustand hergestellt ist, in dem eine Bedienung der Arbeitseinheit (3) oder der Steuerungseinheit (70) durch das Endgerät ausgeführt werden kann, in einem Fall, in dem die vorbestimmte Informationseingabe von dem Endgerät angibt, dass das Endgerät durch das vorbestimmte Netzwerk (150) verbunden ist, zu benachrichtigen.

7. Spritzgießmaschine (1) nach einem der Ansprüche 1 bis 6,
wobei die Identifikationsinformationen, die von der Verwaltungseinheit (705) verwaltet werden, eine für jeden Nutzer spezifische Kennung und Attributinformationen umfassen.

8. Spritzgießmaschine (1) nach einem der Ansprüche 1 bis 7,
wobei die Steuerungseinheit (70) einen bedientauglichen Inhalt gemäß einem Nutzer, der das zweite Endgerät (200) verwendet, oder gemäß einem Status des Durchlaufens eines Netzwerks zwischen dem zweiten Endgerät (200) und der Steuerungseinheit (70) im Falle der Bedieneingabe von dem zweiten Endgerät (200) verändert, wenn ein Zustand hergestellt ist, in dem eine Bedienung der Arbeitseinheit (3) oder der Steuerungseinheit (70) durch das zweite Endgerät (200) ausgeführt werden kann.

9. Spritzgießmaschine (1) nach einem der Ansprüche 1 bis 8,
wobei die Steuerungseinheit (70) im Falle der Bedieneingabe von dem zweiten Endgerät (200) Offenlegung mindestens eines Teils von Bedieninformationen der Arbeitseinheit (3) auf dem zweiten Endgerät (200) basierend auf der Bedieneingabe erlaubt.

10. Spritzgießmaschine (1) nach einem der Ansprüche 1 bis 9,
wobei die Steuerungseinheit (70) im Falle der Bedieneingabe von dem zweiten Endgerät (200) mindestens einen Teil einer Bedienung im Zusammenhang mit einer Bedienung der Arbeitseinheit (3) basierend auf der Bedieneingabe beschränkt.

11. Spritzgießmaschine (1) nach einem der Ansprüche 1 bis 10, ferner umfassend:
mehrere Hauptkörper (2), die jeweils die Arbeitseinheit (3) und die Steuerungseinheit (70) umfassen,
wobei Zugangsinformationen zur kommunizierbaren Verbindung mit der Steuerungseinheit (70) von jedem der Hauptkörper (2), die einem vorbestimmten Nutzer im Zusammenhang mit jedem der Hauptkörper (2) gegeben werden, im Voraus definiert werden und
jede der Steuerungseinheiten (70), die in den mehreren Hauptkörpern (2) umfasst sind, Zugriff des Endgeräts in einem Fall erlauben, in dem die Zugangsinformationen, die mit dem Hauptkörper (2) assoziiert sind, die sich selbst beinhalten, in einer Zugangsaufforderung umfasst sind, die von einem bestimmten Endgerät durch das vorbestimmte Netzwerk (150) eingegeben wird.

## Revendications

1. Une machine de moulage par injection (1) comprenant :
une unité de travail (3) qui inclut une unité d'injection qui remplit une unité de moule avec un matériau de moulage, et met en oeuvre un travail pour produire un produit de moulage à partir du matériau de moulage ; et
une unité de commande (70) qui commande l'unité de travail (3) ;
dans laquelle l'unité de commande (70) est configurée pour rendre différent un contenu exploitable, de l'unité de travail (3) ou de l'unité de commande (70), entre un cas d'opération appliquée en entrée à partir d'un premier terminal (100A) lorsque le premier terminal (100A) est connecté, de manière à pouvoir communiquer, à l'unité de commande (70), par le biais d'un réseau local (110), et un cas d'opération appliquée en entrée à partir d'un second terminal (200) lorsque le second terminal (200) est connecté, de manière à pouvoir communiquer, à l'unité de commande (70), par le biais d'un réseau prédéterminé (150) ;
dans lequel le contenu exploitable inclut au moins une opération connexe à une opération de l'unité de travail (3) ; et
dans lequel l'unité de commande (70) inclut une unité de gestion (705) qui est configurée pour gérer des informations d'identification pour identifier si un terminal donné est connecté ou non par le biais du réseau prédéterminé (150), collationne des informations prédéterminées qui sont appliquées en entrée à partir d'un terminal donné, avec les informations d'identification qui sont gérées par l'unité de gestion (705), et détermine un contenu exploitable par l'intermédiaire d'une opération appliquée en entrée à partir du terminal selon un résultat de collationnement.

2. La machine de moulage par injection (1) selon la revendication 1,
dans laquelle, chaque terminal parmi le premier terminal (100A) et le second terminal (200) est en mesure d'exécuter au moins un contenu d'opération parmi une pluralité de contenus d'opération qui sont définis à l'avance par rapport à l'unité de travail (3) ou à l'unité de commande (70), et d'exécuter différents contenus d'opération, lorsqu'un état est établi dans lequel une opération de l'unité de travail (3) ou de l'unité de commande (70) est apte à être exécutée.

3. La machine de moulage par injection (1) selon la revendication 2,
dans laquelle, la pluralité de contenus d'opération inclut une opération pour amener l'unité de travail (3) à exécuter le travail, une opération pour modifier une condition de moulage de l'unité de travail (3), une opération pour transmettre des données de la condition de moulage à l'unité de commande (70), une opération pour faire référence à la condition de moulage de l'unité de travail (3), une opération pour faire référence aux informations d'opération de l'unité de travail (3), une opération pour définir un logiciel en vue d'amener l'unité de travail (3) à exécuter un travail, une opération pour transmettre des données du logiciel à l'unité de commande (70), et une opération pour faire référence à des données du logiciel défini.

4. La machine de moulage par injection (1) selon l'une quelconque des revendications 1 à 3,
dans laquelle, le réseau prédéterminé (150) inclut le réseau local, un réseau externe et un réseau mondial.

5. La machine de moulage par injection (1) selon l'une quelconque des revendications 1 à 4,
dans laquelle, l'unité de commande (70) est configurée de manière à ne pas amener l'unité de travail (3) à exécuter le travail, même s'il existe une opération appliquée en entrée pour amener l'unité de travail (3) à exécuter le travail, ou pour lui permettre de le faire, à partir du terminal, lorsqu'un état est établi dans lequel une opération de l'unité de travail (3) ou de l'unité de commande (70), par le terminal, peut être exécutée, dans un cas où les informations prédéterminées appliquées en entrée à partir du terminal indiquent que le terminal est connecté par le biais du réseau prédéterminé (150).

6. La machine de moulage par injection (1) selon l'une quelconque des revendications 1 à 5,
dans laquelle, l'unité de commande (70) est configurée de manière à notifier, au terminal, uniquement un contenu qui est exploitable lorsqu'un état est établi dans lequel une opération de l'unité de travail (3) ou de l'unité de commande (70), par le terminal, peut être exécutée, parmi tous les contenus d'opération, ou uniquement un contenu qui est non-exploitable lorsqu'un état est établi dans lequel une opération de l'unité de travail (3) ou de l'unité de commande (70), par le terminal, peut être exécutée, dans un cas où les informations prédéterminées appliquées en entrée à partir du terminal indiquent que le terminal est connecté par le biais du réseau prédéterminé (150).

7. La machine de moulage par injection (1) selon l'une quelconque des revendications 1 à 6,
dans laquelle, les informations d'identification qui sont gérées par l'unité de gestion (705) incluent un identificateur spécifique à chaque utilisateur et des informations d'attribut.

8. La machine de moulage par injection (1) selon l'une quelconque des revendications 1 à 7,
dans laquelle, l'unité de commande (70) modifie un contenu exploitable selon un utilisateur qui utilise le second terminal (200), ou selon un état de passage à travers un réseau entre le second terminal (200) et l'unité de commande (70), dans le cas de l'opération appliquée en entrée à partir du second terminal (200), lorsqu'un état est établi dans lequel une opération de l'unité de travail (3) ou de l'unité de commande (70), par le second terminal (200), peut être exécutée.

9. La machine de moulage par injection (1) selon l'une quelconque des revendications 1 à 8,
dans laquelle, l'unité de commande (70) permet, dans le cas de l'opération appliquée en entrée à partir du second terminal (200), la divulgation d'au moins une partie des informations d'opération de l'unité de travail (3), sur le second terminal (200), sur la base de l'opération appliquée en entrée.

10. La machine de moulage par injection (1) selon l'une quelconque des revendications 1 à 9,
dans laquelle, l'unité de commande (70) limite, dans le cas de l'opération appliquée en entrée à partir du second terminal (200), au moins une partie d'une opération connexe à une opération de l'unité de travail (3), sur la base de l'opération appliquée en entrée.

11. La machine de moulage par injection (1) selon l'une quelconque des revendications 1 à 10, comprenant en outre :
une pluralité de corps principaux (2) qui incluent chacun l'unité de travail (3) et l'unité de commande (70) ;
dans laquelle, des informations d'accès pour une connexion, en mesure de communiquer, à l'unité de commande (70), de chacun des corps principaux (2), lesquelles sont transmises à un utilisateur prédéterminé en association avec chacun des corps principaux (2), sont définies à l'avance ; et
dans laquelle, les unités de commande (70), lesquelles sont incluses dans la pluralité de corps principaux (2), permettent chacune l'accès du terminal, dans un cas où les informations d'accès associées au corps principal (2), lequel inclut lui-même une unité de commande, sont incluses dans une demande d'accès qui est appliquée en entrée, à partir d'un terminal donné, par le biais du réseau prédéterminé (150).
